# EUROPEAN PATENT APPLICATION

(11) **EP 4 462 856 A1**
(43) Date of publication of application: **13.11.2024**
(21) Application number: 23752426.9
(22) Date of filing: 10.02.2023
(51) Int. Cl.: H04W 24/08

(54) **COMMUNICATION METHOD AND COMMUNICATION APPARATUS**

(30) Priority: 14.02.2022 CN 202210135623
(71) Applicant: Huawei Technologies Co., Ltd., Shenzhen, Guangdong 518129 (CN)
(72) Inventor: LIU, Mengting, Shenzhen, Guangdong 518129 (CN); HUANG, Su, Shenzhen, Guangdong 518129 (CN); GUO, Yinghao, Shenzhen, Guangdong 518129 (CN)
(74) Representative: Goddar, Heinz J.
(86) International application number: PCT/CN2023/075419
(87) International publication number: WO 2023/151647

(57) **Abstract**

This application discloses a communication method and a communication apparatus. The method includes: A terminal device determines that a first condition and/or a second condition are/is satisfied, and sends a request message, where the request message may be for requesting to activate at least one set of measurement information in preconfigured measurement information or requesting measurement information outside a preconfigured range, the first condition is that the preconfigured measurement information is available and that the at least one set of measurement information in the preconfigured measurement information satisfies a measurement requirement of the terminal device, and the second condition is that the terminal device is allowed to request, via MAC CE signaling, to activate the preconfigured measurement information. The first condition and/or the second condition may be considered as a triggering condition for the terminal device to send the request message. The terminal device initiates the request message only when determining that the first condition and/or the second condition are/is satisfied, to avoid initiating the request message when the triggering condition is not satisfied, so that a success rate of obtaining the measurement information can be improved.

## Description

### CROSS-REFERENCE TO RELATED APPLICATIONS

This application claims priority to Chinese Patent Application No. 202210135623.4, filed with the China National Intellectual Property Administration on February 14, 2022 and entitled "COMMUNICATION METHOD AND COMMUNICATION APPARATUS", which is incorporated herein by reference in its entirety.

### TECHNICAL FIELD

This application relates to the field of positioning technologies, and in particular, to a communication method and a communication apparatus in a positioning process.

### BACKGROUND

When a terminal device needs to perform positioning measurement, the terminal device may request, from an access network device, a measurement configuration corresponding to a positioning reference signal (positioning reference signal, PRS). The access network device sends, to the terminal device in response to the request of the terminal device, the measurement configuration corresponding to the request, so that the terminal device performs positioning measurement. To reduce positioning latency, it is currently proposed that the access network device may preconfigure measurement information of the positioning reference signal. For a case in which the measurement information of the positioning reference signal is preconfigured in a network, there is no corresponding solution for how the terminal device performs a positioning measurement procedure.

### SUMMARY

This application provides a communication method and a communication apparatus, to provide, for a case in which measurement information of a positioning reference signal is preconfigured, a procedure in which a terminal device performs positioning measurement.

According to a first aspect, a communication method is provided, and may be performed by a first communication apparatus. The first communication apparatus may be a terminal device, or the first communication apparatus is a communication apparatus that can support a terminal device in implementing a function needed in the method, for example, a chip system. It should be understood that the chip system may be disposed in the terminal device. The following provides descriptions by using an example in which the first communication apparatus is the terminal device. The method includes the following steps.

The terminal device determines that a first condition and/or a second condition are/is satisfied, and sends a request message. The first condition is that preconfigured measurement information is available and that at least one set of measurement information in the preconfigured measurement information satisfies a measurement requirement of the terminal device. The measurement information is measurement information of a positioning reference signal, and includes MG configuration information and/or PPW configuration information. That the preconfigured measurement information is available may alternatively be understood as that the measurement information is preconfigured. The second condition is that the preconfigured measurement information is allowed to be requested, by using media access control (media access control, MAC) control element (control element, CE) signaling, to be activated. It may alternatively be understood as that the second condition is that an access network device allows the terminal device to request, by using the MAC CE signaling, to activate the preconfigured measurement information. The request message may be for requesting to activate the at least one set of measurement information in the preconfigured measurement information, or the request message is for requesting the measurement information of the positioning reference signal. It may alternatively be understood as that, before sending the request message, the terminal device may determine whether the first condition and/or the second condition are/is satisfied. When determining that the first condition and/or the second condition are/is satisfied, the terminal device sends the request message.

For example, the terminal device determines that the first condition is satisfied; and the request message may be for requesting to activate the at least one set of measurement information in the preconfigured measurement information, or the request message may be for requesting the at least one set of measurement information in the preconfigured measurement information. For another example, the terminal device determines that the second condition is satisfied; and the request message may be for requesting to activate the at least one set of measurement information in the preconfigured measurement information, or the request message may be for requesting the measurement information of the positioning reference signal. For another example, the terminal device determines that the first condition and the second condition are satisfied, and the request message may be for requesting to activate the at least one set of measurement information in the preconfigured measurement information. It should be understood that "preconfigured" means that the access network device sends, to the terminal device or a location management device in advance, the measurement information related to the positioning reference signal. The terminal device or the location management device may request, based on a requirement, the access network device to activate the preconfigured measurement information or deactivate the measurement information. Accordingly, the access network device may perform activation by using signaling or a message in response to the request of the terminal device or the location management device. Alternatively, the terminal device or the location management device may request, based on a requirement, the access network device to deactivate configured or successfully activated measurement information. Accordingly, the access network device may perform deactivation by using signaling or a message in response to the request of the terminal device or the location management device.

In this embodiment of this application, the first condition and/or the second condition may be considered as a triggering condition for the terminal device to request the access network device to activate the preconfigured measurement information or to request the measurement information from the access network device. The terminal device requests the access network device to activate the preconfigured measurement information or requests the measurement information from the access network device only when determining that the first condition and/or the second condition are/is satisfied, to avoid sending the request message when the triggering condition is not satisfied, so that a success rate of obtaining the measurement information can be improved, and measurement performance can be improved.

According to a second aspect, a communication method is provided, and may be performed by a first communication apparatus. The first communication apparatus may be a terminal device, or the first communication apparatus is a communication apparatus that can support a terminal device in implementing a function needed in the method, for example, a chip system. It should be understood that the chip system may be disposed in the terminal device. The following provides descriptions by using an example in which the first communication apparatus is the terminal device. The method includes the following steps.

The terminal device determines that a third condition is satisfied, and sends a request message. The request message is for requesting measurement information of a positioning reference signal. The measurement information includes PPW configuration information, or the measurement information includes MG configuration information and PPW configuration information. The third condition is that the measurement information of the positioning reference signal is not configured, or the third condition is that the measurement information of the positioning reference signal does not satisfy a measurement requirement of the terminal device. It may alternatively be understood as that the third condition is that the measurement information of the positioning reference signal is not configured or not activated in a network or that the measurement information that is of the positioning reference signal and that is configured or activated in a network does not satisfy the measurement requirement of the terminal device. It may alternatively be understood as that, before sending the request message, the terminal device may determine whether the third condition is satisfied. When determining that the third condition is satisfied, the terminal device sends the request message.

In this embodiment of this application, the third condition may be considered as a triggering condition for the terminal device to request the measurement information from an access network device. The terminal device requests the measurement information from the access network device only when determining that the third condition is satisfied, to avoid requesting the measurement information from the access network device when the triggering condition is not satisfied, so that a success rate of obtaining the measurement information can be improved, and measurement performance can be improved.

In a possible implementation, before sending the request message, the terminal device may determine whether a first condition and/or a second condition are/is satisfied, or determine whether the third condition is satisfied. It may alternatively be understood as that the first condition and/or the second condition are/is a condition A, and the third condition is a condition B; and before sending the request message, the terminal device may determine whether the condition A or the condition B is satisfied.

According to a third aspect, a communication method is provided, and may be performed by a first communication apparatus. The first communication apparatus may be a terminal device, or the first communication apparatus is a communication apparatus that can support a terminal device in implementing a function needed in the method, for example, a chip system. It should be understood that the chip system may be disposed in the terminal device. The following provides descriptions by using an example in which the first communication apparatus is the terminal device. The method includes the following steps.

The terminal device determines that a fourth condition and/or a fifth condition are/is satisfied, and sends a request message. The request message is for requesting to deactivate at least one set of measurement information. For example, the request message is for requesting to deactivate at least one set of measurement information in configured measurement information, or the request message is for requesting to deactivate at least one set of measurement information in activated measurement information. The measurement information is measurement information of a positioning reference signal, and includes MG configuration information and/or PPW configuration information. The fourth condition is that a message for stopping or ending measurement is received or that the measurement information is no longer needed. It may alternatively be understood as that the fourth condition is that the configured measurement information or the activated measurement information is no longer needed. The fifth condition is that there is activated measurement information currently or that the measurement information is allowed to be requested to be deactivated. It may alternatively be understood as that the fifth condition is that the terminal device is allowed to request to deactivate the configured or successfully activated measurement information. It should be understood that the terminal device does not use successfully "deactivated" measurement information. It may alternatively be understood as that, before sending the request message, the terminal device may determine whether the fourth condition and/or the fifth condition are/is satisfied. When the terminal device determines that the fourth condition is satisfied, that is, the terminal device does not need the configured or activated measurement information, the terminal device requests to deactivate some measurement information, to release a network resource, improve resource utilization, and reduce measurement complexity of the terminal. When the terminal device determines the fifth condition, the terminal device may send a deactivation request, to reduce positioning latency. When the terminal device determines that the fifth condition is not satisfied, the terminal device may send a deactivation request.

In this embodiment of this application, the fourth condition and/or the fifth condition may be considered as a triggering condition for the terminal device to send the deactivation request. The terminal device sends, only when determining that the fourth condition and/or the fifth condition are/is satisfied, a request to deactivate the measurement information, to avoid initiating the deactivation request to an access network device when the triggering condition is not satisfied, so that a success rate of the deactivation request can be improved, and a waste of the network resource can be avoided.

In a possible implementation of the first aspect or the second aspect, if the terminal device determines that the measurement information of the positioning reference signal is available or the measurement information of the positioning reference signal has been configured and that the measurement information of the positioning reference signal satisfies the measurement requirement of the terminal device, the terminal device performs positioning measurement. That is, if the terminal device determines that the third condition is not satisfied, the terminal device performs positioning measurement. Before performing positioning measurement, the terminal device may determine whether the third condition is satisfied. If the third condition is satisfied, the terminal device requests the measurement information of the positioning reference signal from the access network device. If the third condition is not satisfied, the terminal device may perform positioning measurement without requesting the measurement information of the positioning reference signal, to reduce positioning latency.

In a possible implementation of the first aspect or the second aspect, the measurement information includes the MG configuration information and the PPW configuration information, and the terminal device may perform positioning measurement based on the MG configuration information, and not perform positioning measurement based on the PPW configuration information. It may alternatively be understood as that, a priority of performing positioning measurement based on the MG configuration information is higher than a priority of performing positioning measurement based on the PPW configuration information. In this way, when the MG configuration information and the PPW configuration information are configured or activated in the network, the terminal device preferentially uses the MG configuration information. It may be understood that, if the access network device configures or activates the MG configuration information, it indicates that the access network device has completed operations such as related resource scheduling and configuration. In this way, the terminal device uses the MG configuration information to perform positioning measurement, that is, uses a measurement gap to perform measurement, without considering a measurement priority sequence between the positioning reference signal, another reference signal, and data, to reduce processing complexity of the terminal device.

In a possible implementation, the measurement information includes the MG configuration information and the PPW configuration information, and the terminal device may perform positioning measurement based on the PPW configuration information, and not perform positioning measurement based on the MG configuration information. In this way, when the terminal device performs positioning measurement, within duration of a PPW, the terminal device may alternatively measure or process a reference signal other than the positioning reference signal and data, to reduce impact of positioning on communication.

In a possible implementation of the first aspect or the second aspect, the terminal device determines that the third condition is satisfied but the first condition is not satisfied, and sends the request message to the access network device. That the request message is for requesting the measurement information of the positioning reference signal may alternatively be understood as that the request message is for requesting to configure the measurement information of the positioning reference signal in the network. When the terminal device determines that the third condition is satisfied but the first condition is not satisfied, that is, when the measurement information is not preconfigured in the network, and the terminal device determines that the measurement information has not been configured or the preconfigured measurement information has not been activated in the network, or the terminal device determines that the measurement information configured or activated in the network does not satisfy the measurement requirement, the terminal device may request to configure the measurement information in the network.

In a possible implementation of the first aspect or the second aspect, the measurement information includes the MG configuration information and the PPW configuration information, and the request message may be for requesting the PPW configuration information rather than the MG configuration information. It may alternatively be understood as that a request priority of the PPW configuration information is higher than a request priority of the MG configuration information. It should be understood that measurement based on the PPW configuration information is not performed based on the measurement gap MG. Within the duration of the PPW, the terminal device may alternatively measure or process the reference signal other than the positioning reference signal and the data, so that impact on communication data transmission is small. The impact on the communication data transmission can be reduced according to the method provided in this embodiment of this application, that is, by preferentially requesting the PPW configuration information.

In a possible implementation, the measurement information includes MG configuration information and the PPW configuration information, and the request message may be for requesting the MG configuration information rather than the PPW configuration information. Positioning measurement performance can be preferentially ensured and the processing complexity of the terminal device can be reduced according to the method provided in this embodiment of this application, that is, by preferentially requesting the MG configuration information.

In a possible implementation of the first aspect or the second aspect, the terminal device determines that the first condition and the third condition are satisfied, and sends the request message to the access network device. The request message is for requesting to activate the preconfigured measurement information of the positioning reference signal. When the terminal device determines that the first condition and the third condition are satisfied, it may be considered that a priority of requesting to activate the preconfigured measurement information in the network is higher than a priority of requesting to configure the measurement information in the network. That is, when the measurement information is preconfigured in the network, and the terminal device determines that the measurement information has not been configured or the preconfigured measurement information has not been activated in the network, or the terminal device determines that the measurement information configured or activated in the network does not satisfy the measurement requirement, the terminal device may preferentially request to activate the measurement information configured in the network.

Further, if the terminal device determines that the second condition is satisfied, the terminal device may request, based on the MAC CE signaling, to activate the preconfigured measurement information, to reduce the positioning latency. If the terminal device determines that the second condition is not satisfied, the terminal device may request, based on RRC signaling, to activate the preconfigured measurement information.

In a possible implementation of the first aspect or the second aspect, the measurement information includes the MG configuration information and the PPW configuration information, and the request message may be for requesting to activate the preconfigured PPW configuration information rather than the preconfigured MG configuration information. It may alternatively be understood as that an activation request priority of the preconfigured PPW configuration information is higher than an activation request priority of the preconfigured MG configuration information. Preferentially requesting to activate the preconfigured PPW configuration information and preferentially using the PPW configuration information can reduce the impact on the communication data transmission.

In a possible implementation of the first aspect or the second aspect, the preconfigured measurement information includes the preconfigured MG configuration information and the preconfigured PPW configuration information, and the request message may be for requesting to activate the preconfigured MG configuration information rather than the preconfigured PPW configuration information, to preferentially ensure positioning measurement performance, and reduce the processing complexity of the terminal device.

In a possible implementation of any one of the first aspect to the third aspect, when sending the request message, the terminal device may start a first timer. Alternatively, after sending the request message, the terminal device may start a first timer. Within a period of time (for example, a working period of the first timer) after the terminal device sends the request message, the terminal device does not need to send a request message again, to avoid frequent sending of request messages, and reduce energy consumption of the terminal device.

In a possible implementation, the terminal device stops the first timer when receiving the response message or after receiving the response message. The response message is a response message for the request message. For example, the response message is a message for configuring the measurement information, or the response message is a message for activating the preconfigured measurement information. It may be understood that, if the terminal device receives the response message, the terminal device can obtain the measurement information, so that the terminal device does not need to continue to wait the timer, and can stop the timer.

In a possible implementation, the first timer includes one or more of the following parameters: first timing duration, a maximum quantity of times of sending request messages, or a maximum quantity of sets of requested measurement information. The parameter of the first timer may be predefined, or preconfigured or configured in the network. The first timing duration may be understood as duration from starting (starting) to expiration (expiration) of the first timer. The maximum quantity of times of sending the request messages may be understood as a maximum quantity of times that the terminal device is allowed to send the request messages. Similarly, the maximum quantity of sets of requested measurement information may be understood as a maximum quantity of sets of measurement information that the terminal device is allowed to request. Measurement information requested by using request messages sent by the terminal device at different moments may be different. For example, the terminal device sends a first request message at a first moment, where the first request message is for requesting first measurement information; and the terminal device sends a second request message at a second moment, where the second request message is for requesting second measurement information. The first measurement information and the second measurement information may be different.

Optionally, after the first timer starts, a quantity of times that the terminal device sends request messages is accumulated. Optionally, after the first timer starts, a quantity of sets of measurement information requested by the terminal device is accumulated. Optionally, after the first timer starts, a quantity of times that the terminal device sends request messages is accumulated, and a quantity of sets of measurement information requested by the terminal device is accumulated.

It should be noted that a condition for the first timer to "end" or a case in which the first timer "ends" is different from a condition for the first timer to "stop" or a case in which the first timer "stops". When the accumulated quantity of times that the terminal device sends the request messages reaches the maximum quantity of times of sending the request messages, the first timer ends. When the accumulated quantity of sets of measurement information requested by the terminal device reaches the maximum quantity of sets of requested measurement information, the first timer ends. When the accumulated quantity of times that the terminal device sends the request messages reaches the maximum quantity of times of sending the request messages, and the accumulated quantity of sets of measurement information requested by the terminal device reaches the maximum quantity of sets of requested measurement information, the first timer ends. When duration of the first timer reaches the first timing duration, the first timer stops. When the terminal device receives the response message or after the terminal device receives the response message, the first timer ends. In this case, the terminal device may determine whether the measurement information is configured or the measurement information is activated in the network, or determine whether the measurement information configured or activated in the network satisfies the measurement requirement, and further determine, based on a determining result, whether to send the request message.

In a possible implementation of any one of the first aspect to the third aspect, if the response message is not received within preset duration, the terminal device may send a failure message. The failure message may indicate that obtaining of the measurement information fails, or the positioning measurement fails. According to the method, the network may be explicitly notified that the terminal device does not obtain the measurement information or a positioning result. Optionally, subsequently, the measurement information may be reconfigured for the terminal device in the network, to improve, as much as possible, the success rate of obtaining the measurement information by the terminal device. Optionally, the failure message may indicate a reason for failing to obtain the measurement information, and provide a reference for reconfiguring the measurement information in the network.

In a possible implementation of any one of the first aspect to the third aspect, before sending the request message, the terminal device may start a second timer. Time is reserved, by using the second timer, for the access network device to configure the measurement information or activate the preconfigured measurement information. In this way, within a period of time (for example, a working period of the second timer) after the terminal device determines that the positioning measurement needs to be performed, if a network device configures the measurement information or activates the preconfigured measurement information, the terminal device does not need to send the request message. According to this solution, it can be avoided that the terminal device sends an unnecessary request message or sends the request message excessively early, and the positioning latency can be effectively reduced.

In a possible implementation, the terminal device stops the second timer when receiving the response message or after receiving the response message. The response message may be a message for configuring the measurement information in the network, or the response message is a message for activating the preconfigured measurement information in the network.

In a possible implementation, a parameter of the second timer may be predefined, or preconfigured or configured by the network device. For example, longest duration of the second timer, namely, second timing duration, may be predefined, preconfigured, or configured.

According to a fourth aspect, an embodiment of this application provides a communication apparatus. The communication apparatus has a function of implementing behavior in the method instance in the first aspect. The communication apparatus may be the terminal device in the first aspect, or the communication apparatus may be an apparatus that can support the terminal device in the first aspect in implementing a function needed in the method provided in the first aspect, for example, a chip or a chip system. For details, refer to the related descriptions in the first aspect. Details are not described herein again.

In a possible design, the communication apparatus includes a corresponding means (means) or module configured to perform the method in the first aspect. For example, the communication apparatus includes a processing module (which is sometimes also referred to as a processing unit) and/or a transceiver module (which is sometimes also referred to as a transceiver unit). These modules (units) may perform corresponding functions in the method example in the first aspect.

For example, the processing module is configured to determine that a first condition and/or a second condition are/is satisfied, where the first condition is that preconfigured measurement information is available and that at least one set of measurement information in the preconfigured measurement information satisfies a measurement requirement; and the second condition is that an access network device allows the terminal device to request, via MAC CE signaling, to activate the preconfigured measurement information, where the preconfigured measurement information is measurement information of a positioning reference signal, and the measurement information includes MG configuration information and/or PPW configuration information. The transceiver module is configured to send a request message, where the request message is for requesting to activate the at least one set of measurement information in the preconfigured measurement information, or the request message is for requesting the measurement information of the positioning reference signal.

According to a fifth aspect, an embodiment of this application provides a communication apparatus. The communication apparatus has a function of implementing behavior in the method instance in the second aspect. The communication apparatus may be the terminal device in the second aspect, or the communication apparatus may be an apparatus that can support the terminal device in the second aspect in implementing a function needed in the method provided in the second aspect, for example, a chip or a chip system. For details, refer to the related descriptions in the second aspect. Details are not described herein again.

In a possible design, the communication apparatus includes a corresponding means (means) or module configured to perform the method in the second aspect. For example, the communication apparatus includes a processing module (which is sometimes also referred to as a processing unit) and/or a transceiver module (which is sometimes also referred to as a transceiver unit). These modules (units) may perform corresponding functions in the method example in the second aspect.

For example, the processing module is configured to determine that a third condition is satisfied, where the third condition is that measurement information of a positioning reference signal is not configured or activated in a network or that measurement information that is of a positioning reference signal and that is configured or activated in a network does not satisfy a measurement requirement of the terminal device. The transceiver module is configured to send a request message, where the request message is for requesting the measurement information of the positioning reference signal.

According to a sixth aspect, an embodiment of this application provides a communication apparatus. The communication apparatus has a function of implementing behavior in the method instance in the third aspect. The communication apparatus may be the terminal device in the third aspect, or the communication apparatus may be an apparatus that can support the terminal device in the second aspect in implementing a function needed in the method provided in the third aspect, for example, a chip or a chip system. For details, refer to the related descriptions in the third aspect. Details are not described herein again.

In a possible design, the communication apparatus includes a corresponding means (means) or module configured to perform the method in the third aspect. For example, the communication apparatus includes a processing module (which is sometimes also referred to as a processing unit) and/or a transceiver module (which is sometimes also referred to as a transceiver unit). These modules (units) may perform corresponding functions in the method example in the third aspect.

For example, the processing module is configured to determine that a fourth condition and/or a fifth condition are/is satisfied, where the fourth condition is that a message for stopping or ending measurement is received, or the fourth condition is that measurement information is no longer needed; and the fifth condition is that there is activated measurement information currently or that the measurement information is allowed to be requested to be deactivated. The transceiver module is configured to send a request message, where the request message is for requesting to deactivate at least one set of measurement information in configured measurement information, or the request message is for requesting to deactivate at least one set of measurement information in activated measurement information.

According to a seventh aspect, an embodiment of this application provides a communication apparatus. The communication apparatus may be the communication apparatus according to any one of the third aspect to the fifth aspect in the foregoing embodiments, or may be a chip or a chip system disposed in the communication apparatus according to any one of the third aspect to the fifth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

According to an eighth aspect, an embodiment of this application provides a communication apparatus. The communication apparatus includes an input/output interface and a logic circuit. The input/output interface is configured to input and/or output information. The logic circuit is configured to perform the method in the first aspect, and/or the logic circuit is configured to perform the method in the second aspect; or the logic circuit is configured to perform the method in the third aspect.

According to a ninth aspect, an embodiment of this application provides a chip system. The chip system includes a processor, may further include a memory and/or a communication interface, and is configured to implement the method according to any one of the first aspect to the third aspect. In a possible implementation, the chip system further includes the memory, configured to store program instructions and/or data. The chip system may consist of a chip, or may include the chip and another discrete component.

According to a tenth aspect, an embodiment of this application provides a communication system. The communication system includes a network device and a terminal device. The terminal device is, for example, the terminal device according to any one of the first aspect to the third aspect. Optionally, the communication system may further include a location management device.

According to an eleventh aspect, this application provides a computer-readable storage medium. The computer-readable storage medium stores a computer program. When the computer program is run, the method according to any one of the first aspect to the third aspect is implemented.

According to a twelfth aspect, a computer program product is provided. The computer program product includes computer program code. When the computer program code is run, the method according to any one of the first aspect to the third aspect is enabled to be performed.

For beneficial effects of the fourth aspect to the twelfth aspect and the implementations of the fourth aspect to the twelfth aspect, refer to the descriptions of the beneficial effects of the first aspect to the third aspect and the implementations of the first aspect to the third aspect.

### BRIEF DESCRIPTION OF DRAWINGS

FIG. 1 is a diagram of a positioning architecture of a communication system to which an embodiment of this application is applicable;
FIG. 2 is a diagram of a network architecture of a communication system to which an embodiment of this application is applicable;
FIG. 3 is a diagram of a network architecture of another communication system to which an embodiment of this application is applicable;
FIG. 4 is a diagram of a network architecture of still another communication system to which an embodiment of this application is applicable;
FIG. 5 is a schematic flowchart of an example of a communication method according to an embodiment of this application;
FIG. 6 is a diagram of a working procedure of a first timer according to an embodiment of this application;
FIG. 7 is a flowchart of using a first timer according to an embodiment of this application;
FIG. 8 is a diagram of a structure of a communication apparatus according to an embodiment of this application;
FIG. 9 is a diagram of another structure of a communication apparatus according to an embodiment of this application; and
FIG. 10 is a diagram of a structure of a communication apparatus according to an embodiment of this application.

### DESCRIPTION OF EMBODIMENTS

To facilitate understanding of the technical solutions provided in embodiments of this application, some technical terms in embodiments of this application are first explained and described.
(1) A (radio) access network ((radio) access network, (R)AN) device may also be referred to as an access device. The (R)AN can manage a radio resource, provide an access service for user equipment, and complete forwarding of user equipment data between the user equipment and a core network. The (R)AN may alternatively be understood as a base station in a network.

For example, the access network device in embodiments of this application may be any communication device that has a wireless transceiver function and that is configured to communicate with the user equipment. The access network device includes but is not limited to, for example, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, may be a next-generation NodeB (next-generation NodeB, gNB) or a transmission point (TRP or TP) in a 5G system such as an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point. In a positioning architecture based on a 5G core network, a gNB/ng-eNB may provide measurement information for target user equipment, and convey the information to a location management device.

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a MAC layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may alternatively be considered as being sent by the DU or sent by the DU and the AAU. It may be understood that the access network device may be a device including one or more of a CU node, a DU node, or an AAU node. In addition, the CU may be classified as an access network device in a radio access network (radio access network, RAN), or the CU may be classified as an access network device in the core network (core network, CN). The access network device may be a next-generation radio access network (next-generation radio access network, NG-RAN). This is not limited in this application.

In embodiments of this application, an apparatus configured to implement a function of the access network device may be the access network device, or may be an apparatus that can support the access network device in implementing the function, for example, a chip system, and the apparatus may be installed in the access network device. In the technical solutions provided in embodiments of this application, an example in which the apparatus configured to implement the function of the access network device is the access network device is used for description.

(2) A terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device with a wireless connection function, or a vehicle-mounted device. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

By way of example but not limitation, in embodiments of this application, the terminal device may be alternatively the wearable device. The wearable device may also be referred to as a wearable intelligent device, an intelligent wearable device, or the like, and is a general term of wearable devices that are intelligently designed and developed for daily wear by applying a wearable technology, for example, glasses, gloves, watches, clothes, and shoes. The terminal device may further include a relay (relay). For example, the terminal device may be customer-premises equipment (customer-premises equipment, CPE). The CPE may receive a signal from a network device, and forward the signal to another terminal device. Alternatively, it is understood as that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In addition, in embodiments of this application, the terminal device may be an apparatus configured to implement a function of the terminal device, or may be an apparatus that can support the terminal device in implementing the function, for example, a chip system. The apparatus may be installed in the terminal device. For example, the terminal device may alternatively be a vehicle detector. In embodiments of this application, the chip system may consist of a chip, or may include the chip and another discrete component. In the technical solutions provided in embodiments of this application, an example in which the apparatus configured to implement the function of the terminal device is the terminal device is used for description.

(3) A location management device may also be referred to as a location management network element, and is mainly responsible for location management. For example, the location management device receives a positioning request from another network element (for example, an access and mobility management network element), collects positioning data of a user, and obtains a user location through positioning calculation. The location management network element may further manage and configure a base station or a location management unit, implement configuration of a positioning reference signal, and the like. A name of the location management device is not limited in embodiments of this application. For example, the location management device may also be referred to as a positioning device, a location server, a positioning service centre, or a positioning processing centre. The location management device in embodiments of this application may be a location management function (location management function, LMF) or a location management component (location management component, LMC), or may be a local location management function (local location management function, LLMF) located in an access network device, another network element having a similar function, or the like. For ease of description, the following embodiments are described by using an example in which the location management device is the LMF.

In a positioning architecture based on a 5G core network, a function of the LMF network element may be being responsible for supporting different types of location services related to target UE, including positioning the UE and transmitting assistance data to the UE. A control plane and a user plane of the LMF network element are respectively an evolved serving mobile location centre (evolved serving mobile location centre, E-SMLC) and a service location protocol (service location protocol, SLP). The LMF network element may perform the following information exchange with an ng-eNB/gNB and the UE:
exchanging information with the next-generation evolved NodeB (next-generation evolved NodeB, ng-eNB)/gNB via an NR positioning protocol A (NR positioning protocol A, NRPPa) message, for example, obtaining configuration information of the PRS and a sounding reference signal (sounding reference signal, SRS), cell timing, and cell location information; and
transferring UE capability information, assistance information, measurement information, and the like between the LMF network element and the UE via an LTE positioning protocol (LTE positioning protocol, LPP) message.

(4) Positioning methods are classified into the following three types based on a source of a positioning reference signal (positioning reference signal, PRS): a downlink positioning method, an uplink positioning method, and uplink-downlink joint positioning method. It should be noted that an uplink and a downlink herein are relative. If a transmission direction from a network device to a terminal device is the downlink (this is used as an example in this specification), a transmission direction from the terminal device to the network device is the uplink. If a transmission direction from a network device to a terminal device is the uplink, a transmission direction from the terminal device to the network device is the downlink.

In the downlink positioning method, the terminal device measures a downlink positioning reference signal (downlink positioning reference signal, DL-PRS) sent by a network side. The terminal device estimates a location of the terminal device based on a measurement result, to implement downlink positioning.

In the uplink positioning method, the network device measures an uplink positioning reference signal (uplink positioning reference signal, UL-PRS) sent by the terminal device. The network device estimates a location of the terminal device based on a measurement result, to implement uplink positioning. The uplink positioning reference signal may be an SRS, or another reference signal that may be for uplink measurement. This is not limited in embodiments of this application. For example, the SRS may be an uplink reference signal for multiple-input multiple-output (multiple-input multiple-output, MIMO) (a MIMO-SRS). Alternatively, the SRS may be an uplink positioning reference signal dedicated to positioning (a pos-SRS).

In the uplink-downlink joint positioning method, the network device measures an uplink positioning signal from the terminal device, and the terminal device measures a downlink positioning reference signal from the network device. A location of the terminal device is estimated based on a measurement result of the network device and a measurement result of the terminal device.

(5) Measurement configuration information of a positioning reference signal (positioning reference signal, PRS) includes MG configuration information and PPW configuration information. In this specification, the PPW configuration information is also referred to as measurement processing window configuration information.

It may be understood that, if a terminal device has only one set of radio frequency channels, receiving a signal in an inter-frequency neighboring cell while receiving and sending signals in a serving cell is not supported. In other words, if the terminal device uses one radio frequency module to perform measurement and signal receiving and sending, the terminal device cannot simultaneously work on two inter-frequency frequencies. In this case, the terminal device needs to measure, in a gap (gap) measurement manner, a signal received on an inter-frequency frequency. The terminal device stops receiving and sending the signals in the serving cell in a gap, adjusts the radio frequency channels to the inter-frequency frequency, and receives the signal in the inter-frequency neighboring cell. After gap time ends, the radio frequency channels are switched to a current cell frequency.

The gap may be configured by a network device. That is, the network device may configure an MG. An MG configuration parameter includes one or more of the following: a measurement gap repetition period (measurement gap repetition period, MGRP), a measurement offset (gapOffset), a measurement length (measurement gap length, MGL), or a measurement timing advance (measurement gap timing advance, MGTA). The MGRP is for configuring a period of the gap, for example, 4 ms, 20 ms, 80 ms, or 160 ms. gapOffset is for configuring a start location of the gap. Starting from a start subframe in the period, a value set of the measurement offset is {0, 1, ..., MGRP-1}. For example, if MGRP=160 ms, the measurement offset has 160 values. For another example, if MGRP=20 ms, the value set of the measurement offset is {0, 1, ..., 19}. The MGL is for configuring a length of the gap. For example, the MGL may be 1.5 ms, 3 ms, 3.5 ms, 4 ms, 5.5 ms, or 6 ms. If the MGTA is configured, measurement MGTA ms is started by using the measurement gap before a gap subframe occurs. That is, ending of the measurement gap is advanced from a time gap ms to before a latest subframe occurs. The MGTA is 0.25 ms or 0.5 ms.

As shown above, the terminal device stops receiving and sending the signals in the serving cell in the gap. Therefore, a PPW is introduced. That is, PRS measurement is performed based on no gap. In this way, the terminal device may not need to interrupt measurement of a PRS sent by a serving base station, to improve positioning performance. In the PPW, priorities of the PRS, another signal, and communication data may be determined based on a capability of the terminal device. For example, the terminal device may preferentially process the PRS. An access network device may configure the PPW. A PPW configuration parameter may include one or more of the following: a start location (for example, a start slot), a period, a length, an associated cell (cell), and a subcarrier spacing (subcarrier spacing, SCS), or whether another parameter (for example, a priority, a frequency band, or a component carrier (component carrier, CC)) is supported.

(6) "At least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. The character "/"usually indicates an "or" relationship between the associated objects. "At least one of the following" or a similar expression thereof means any combination of these more than 10 items, including a singular item or any combination of plural items. For example, at least one of a, b, or c may represent a, b, c, a combination of a and b, a combination of a and c, a combination of b and c, or a combination of a, b, and c, where a, b, and c may be in a singular or plural form.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first condition and a second condition are merely for distinguishing between different conditions, but do not indicate a difference in priorities, a sending order, importance, or the like of the two conditions.

The foregoing describes some technical terms in embodiments of this application. The following describes content related to embodiments of this application.

When a terminal device needs to perform positioning measurement, the terminal device may request a corresponding measurement configuration from an access network device. Alternatively, a location management device requests a corresponding measurement configuration from an access network device. The access network device sends, to the terminal device in response to the request of the terminal device or the location management device, the measurement configuration corresponding to the request, so that the terminal device performs positioning measurement by using the measurement configuration.

For example, if the terminal device receives, from the location management device, inter-RAT (Inter-RAT) mobility control reference signal time difference (reference signal time difference, RSTD) measurement related to an observed time difference of arrival (observed time difference of arrival, OTDOA) or NR DL-PRS measurement, the terminal device determines that an MG needs to be measured to perform positioning measurement. If MG configuration information is configured in a network, and the MG configuration information satisfies a measurement requirement of the terminal device, the terminal device may perform location measurement or a process of obtaining a subframe time sequence and a slot time sequence of a target E-UTRA system. If no MG configuration information is configured in a network, or configured MG configuration information does not satisfy a measurement requirement of the terminal device, or when the terminal device needs to obtain a subframe time sequence and a slot time sequence of a target E-UTRA system, the terminal device may send a location measurement indication (location measurement indication) to the access network device via RRC signaling, to request MG configuration information. The location measurement indication may indicate that the terminal device is to start location measurement or that the terminal device is to obtain the subframe time sequence and the slot time sequence of the target evolved universal mobile telecommunications system (universal mobile telecommunications system, UMTS) terrestrial radio access (evolved UMTS terrestrial radio access, E-UTRA) system. The location measurement indication is for requesting the MG configuration information of the access network device. After the terminal device completes positioning based on an obtained MG configuration, the terminal device may send another location measurement indication to the access network device, to indicate that the terminal device has completed the location measurement or the process of obtaining the subframe time sequence and the slot time sequence of the target E-UTRA system.

To reduce positioning latency, it is currently proposed that the access network device may preconfigure measurement information of a positioning reference signal by using RRC signaling. For example, the MG configuration information and/or PPW configuration information may be preconfigured. When the MG configuration information and the PPW configuration information are preconfigured, that the terminal device follows a current procedure of requesting the MG configuration information is clearly inapplicable. That is, for a case in which the measurement information of the positioning reference signal is preconfigured, there has been no corresponding solution to how the terminal device performs positioning measurement.

In view of this, the solutions in embodiments of this application are provided. For a case in which the MG configuration information and the PPW configuration information are preconfigured, embodiments of this application provide a feasible solution to performing positioning measurement by the terminal device.

The solutions provided in embodiments of this application may be applied to various communication systems, for example, an LTE system, a 5G system such as a new radio (new radio, NR) system, or a next-generation communication system such as a 6G system. Certainly, the technical solutions in embodiments of this application may alternatively be applied to another communication system, provided that the communication system has a positioning requirement on a terminal. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of network architectures, the technical solutions provided in embodiments of this application are also applicable to a similar technical problem.

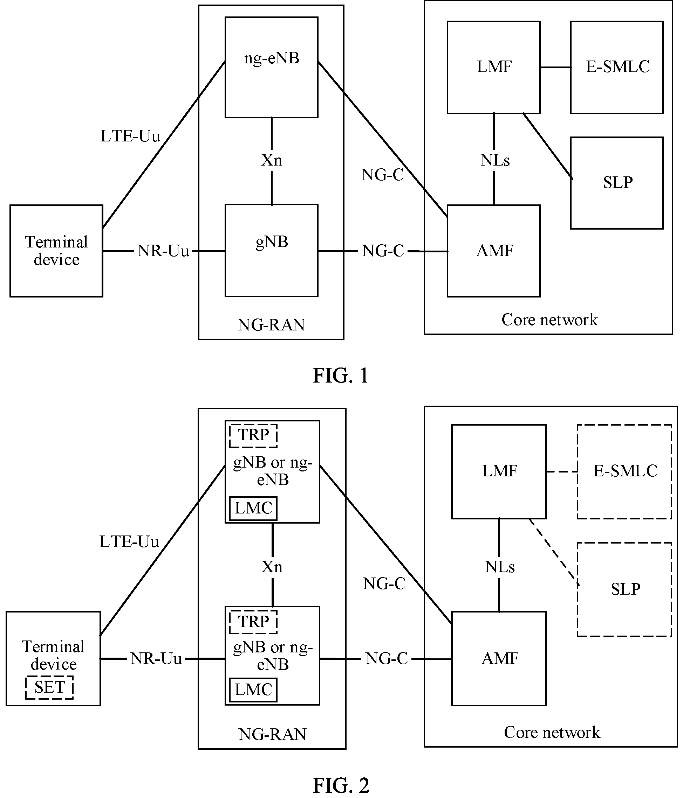

FIG. 1 is a diagram of a positioning architecture of a communication system to which an embodiment of this application is applicable. As shown in FIG. 1, involved network elements/modules mainly include three parts: a next-generation radio access network (next-generation radio access network, NG-RAN), a terminal device, and a core network. The core network includes an LMF, an access and mobility management function (access and mobility management function, AMF), an SLP, an E-SMLC, and the like. A positioning server, namely, the location management function (location management function, LMF), is connected to an AMF, and the LMF and the AMF are connected through an NLs interface. The LMF is responsible for supporting different types of location services related to the terminal, including positioning the terminal and transferring assistance data to the terminal. The AMF may receive a terminal-related location service request from a 5th generation core network location service (5th generation core network location service, 5GC LCS) entity, or the AMF may start some location services on behalf of a specific terminal, and forward the location service request to the LMF. After obtaining location information returned by the terminal, the AMF returns the related location information to the 5GC LCS entity.

The NG-RAN may include a next-generation NodeB (next-generation NodeB, gNB), a next-generation evolved NodeB (next-generation evolved NodeB, ng-eNB), a future evolved network node, or the like. The gNB and the ng-eNB are connected through an Xn interface, and the LMF and the ng-eNB/gNB are connected through an NG-C interface.

It should be understood that FIG. 1 is an example for describing the communication system to which embodiments of this application are applicable, and does not specifically limit a type, a quantity, a connection manner, and the like of network elements included in the communication system to which this application is applicable.

For example, FIG. 2 shows a network architecture of a communication system to which an embodiment of this application is applicable. The communication system includes a core network, an NG-RAN, and a terminal. The core network includes network elements/modules such as an LMF, an AMF, a secure user plane location (secure user plane location, SUPL) location platform (SUPL location platform, SLP), and an E-SMLC. The NG-RAN includes network elements/modules such as a gNB and an ng-eNB. For specific functions of network elements/modules such as the LMF, the AMF, the SLP, the E-SMLC, the gNB, and the ng-eNB and connection relationships between the network elements/modules, refer to the foregoing descriptions of the related part in FIG. 2. Details are not described herein again.

A difference from FIG. 1 lies in that, in the network architecture shown in FIG. 2, an LMC is added to the NG-RAN, and a specific deployment manner of the LMC is being disposed inside a base station, for example, disposed in the gNB or the ng-eNB. In this network architecture, the LMC serves as an internal function of the base station. Therefore, no new interface needs to be introduced.

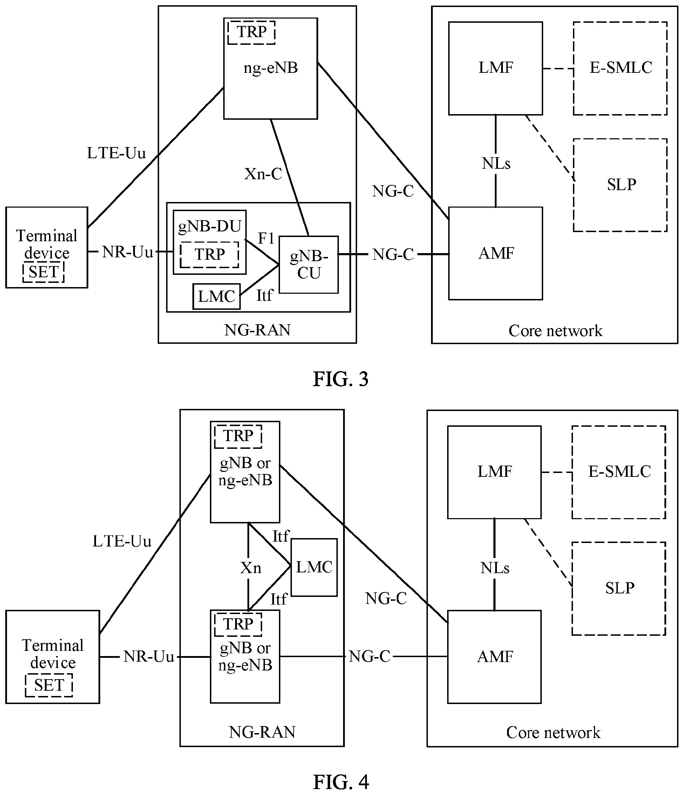

FIG. 3 shows a network architecture of another communication system to which an embodiment of this application is applicable. As shown in FIG. 3, the communication system also includes a core network, an NG-RAN, and a terminal. A difference from FIG. 2 lies in that, an LMC in the network architecture shown in FIG. 3 serves as an independent logical node in the NG-RAN, and is connected to a base station through a new interface. For example, in FIG. 3, the LMC is connected to a gNB-CU through an interface Itf.

FIG. 4 shows a network architecture of still another communication system to which an embodiment of this application is applicable. As shown in FIG. 4, the communication system also includes a core network, an NG-RAN, and a terminal. An LMC serves as an independent logical node in the NG-RAN. A difference from FIG. 3 lies in that, the LMC may be connected to a plurality of base stations through new interfaces in FIG. 4. In FIG. 4, an example in which the LMC is connected to two base stations is used. In specific implementation, the LMC may alternatively be connected to more base stations.

FIG. 1 to FIG. 4 each are an example for describing the communication system to which embodiments of this application are applicable, and does not specifically limit the type, the quantity, the connection manner, and the like of the network elements included in the communication system to which this application is applicable. In addition, the network element/module shown by a dashed line in FIG. 1 to FIG. 4 is not indispensable, and is optional. For example, the E-SMLC or the SLP is not indispensable. Alternatively, the network element/module shown by a dashed line is another existence form. For example, the gNB or the ng-eNB is also referred to as a TRP in some embodiments, and the terminal device is referred to as a secure user plane location (secure user plane location, SUPL) enabled terminal (SUPL enabled terminal, SET) in some embodiments.

A communication method provided in embodiments of this application may be applied to positioning of a terminal device, for example, uplink positioning, downlink positioning, and uplink and downlink positioning. It should be noted that an uplink and a downlink herein are relative. If a transmission direction from a network device to the terminal device is the downlink (this is used as an example in this specification), a transmission direction from the terminal device to the network device is the uplink. If a transmission direction from a network device to the terminal device is the uplink, a transmission direction from the terminal device to the network device is the downlink.

With reference to the accompanying drawings, the following describes in detail the solutions provided in embodiments of this application. It should be noted that, in the accompanying drawings corresponding to embodiments of this application, all steps indicated by dashed lines are optional steps. In embodiments of this application, measurement of a positioning reference signal is used as an example, but the positioning reference signal constitutes no limitation. That is, embodiments of this application may alternatively be applicable to measurement of another reference signal. The another reference signal includes, for example, a synchronization signal and physical broadcast channel block (synchronization signal and PBCH block, SSB). In uplink positioning, the "positioning reference signal" is also referred to as an "uplink reference signal", an "uplink positioning reference signal", or the like. In downlink positioning, the "positioning reference signal" is also referred to as a "downlink reference signal", a "downlink positioning reference signal", or the like. It may alternatively be understood as that the "uplink reference signal", the "uplink positioning reference signal", and the "positioning reference signal" all represent uplink reference signals for positioning; and the "downlink reference signal", the "downlink positioning reference signal", and the "positioning reference signal" all represent downlink reference signals for positioning. Distinction is not clearly made in the following descriptions.

For ease of description, measurement information of the positioning reference signal is referred to as measurement information for short below. In other words, all of the measurement information in embodiments of this application is the measurement information of the positioning reference signal. Accordingly, preconfigured measurement information of the positioning reference signal may be referred to as preconfigured measurement information. The preconfigured measurement information may also be referred to as preconfigured measurement information. One set of measurement information or a plurality of sets of measurement information may be preconfigured in a network. That is, the preconfigured measurement information includes at least one set of measurement information. The set of measurement information may include one or more measurement parameters. For example, if the measurement information includes, for example, MG configuration information and/or PPW configuration information, the measurement parameters include, for example, an offset, a start slot, duration, and a period that are of an MG/PPW, timing advance information of the MG, a cell of the PPW, subcarrier spacing information, and the like. For details, refer to related content in the foregoing technical term (5). Details are not described herein again.

In the following descriptions, that a request message is for requesting the measurement information means requesting to configure the measurement information in the network. Configuring the measurement information in the network may be sending temporarily configured measurement information in the network, indicating to activate the preconfigured measurement information in the network, or indicating to deactivate the measurement information in the network. For a case of requesting to activate the preconfigured measurement information, the request message may be for requesting to activate one or more sets of preconfigured measurement information and/or one or more preconfigured measurement parameters. For a case of requesting to deactivate the measurement information, the request message may be for requesting to deactivate one or more sets of measurement information and/or one or more measurement parameters.

In the following description process, an example in which the method is applied to the communication systems shown in any one of FIG. 1 to FIG. 4 is used. It should be noted that the communication systems in FIG. 1 to FIG. 4 are merely used as examples in embodiments of this application, and embodiments of this application are not limited to this scenario. In addition, the method relates to an access network device and the terminal device, and may further relate to a location management device. In the following descriptions, an example in which the location management device is an LMF network element is used. It should be understood that in future communication such as 6G, the location management device may still be the LMF network element or have another name. This is not limited in embodiments of this application. In addition, the access network device may be an access network device currently serving the terminal device. The access network device may be a device in an NG RAN, for example, a gNB or an ng-eNB. Alternatively, the access network device may be an LMC. As described above, if the LMC serves as an internal function of the access network device, the access network device is an access network device in which the LMC is located. If a deployment solution of the LMC is shown in FIG. 3 or FIG. 4, that is, the LMC serves as an independent logical node, and is connected to one or more access network devices through an interface, the access network device is any access network device connected to the LMC. An example in which the communication method provided in embodiments of this application is applied to the downlink positioning is used below.

When the terminal device needs to perform positioning measurement, the terminal device may request the access network device to configure the measurement information of the positioning reference signal. If the access network device preconfigures the measurement information of the positioning reference signal, the terminal device may alternatively request the access network device to activate the preconfigured measurement information of the positioning reference signal. If configured or activated measurement information is no longer needed, the terminal device may alternatively send a deactivation request to the access network device.

For a case in which the MG configuration information and/or the PPW configuration information are/is preconfigured, embodiments of this application provide a feasible solution to performing positioning measurement by the terminal device. For example, a triggering condition is set for the terminal device to request the measurement information of the positioning reference signal from the network. That is, the triggering condition may be considered as a condition for triggering the terminal device to send the request message to the network. The terminal device requests the measurement information of the positioning reference signal from the network only when determining that the triggering condition is satisfied. That is, before requesting the measurement information of the positioning reference signal from the network, the terminal device may determine whether the triggering condition is satisfied. If the triggering condition is satisfied, the terminal device requests the measurement information of the positioning reference signal from the network, to improve a success rate of obtaining the measurement information by the terminal device. It should be noted that, that the terminal device requests the measurement information of the positioning reference signal from the network may be that the terminal device directly requests the measurement information of the positioning reference signal from the access network device or may be that the terminal device requests the measurement information of the positioning reference signal from the access network device via the location management device. This is not limited in embodiments of this application. An example in which the terminal device directly requests the measurement information of the positioning reference signal from the access network device is used below. It should be noted that an example in which the terminal device performs positioning measurement is used in embodiments of this application. However, embodiments of this application may alternatively be applicable to another device configured to perform positioning measurement.

The triggering condition may include at least one of a first condition, a second condition, and a third condition. The first condition is that the preconfigured measurement information is available and that the at least one set of measurement information in the preconfigured measurement information satisfies a measurement requirement of the terminal device. That the preconfigured measurement information is available may alternatively be understood as that the measurement information is preconfigured. For example, the access network device preconfigures M sets of available measurement information, and N sets of measurement information in the M sets of measurement information are available. The second condition is that the at least one set of measurement information in the preconfigured measurement information is allowed to be requested, via MAC CE signaling, to be activated. It may alternatively be understood as that the second condition is that the access network device allows the terminal device to request, by using the MAC CE signaling, to activate the preconfigured measurement information. In other words, the second condition is that the at least one set of measurement information in the preconfigured measurement information is allowed to be activated by using the MAC CE signaling. The third condition is that the measurement information is not configured, which may alternatively be understood as that the access network device does not configure the measurement information. Alternatively, the third condition is that the measurement information does not satisfy the measurement requirement of the terminal device, which may alternatively be understood as that the measurement information configured by the access network device does not satisfy the measurement requirement of measuring the terminal device. For example, if a measurement window in an MG configuration does not match a send window occasion of the PRS, it may be considered that the measurement information configured by the access network device does not satisfy the measurement requirement of measuring the terminal device. For another example, if an MG that has been configured for radio resource management (radio resource management, RRM) measurement is insufficient for the positioning measurement, it may alternatively be considered that the measurement information configured by the access network device does not satisfy the measurement requirement of measuring the terminal device. For another example, if a period of the MG is not aligned with a period of the PRS, it may alternatively be considered that the measurement information configured by the access network device does not satisfy the measurement requirement of measuring the terminal device. Only several cases in which the measurement information configured by the access network device does not satisfy the measurement requirement of measuring the terminal device are listed herein. A specific configuration of the measurement information that does not satisfy the measurement requirement of measuring the terminal device is not limited in embodiments of this application.

The terminal device determines that the triggering condition is satisfied, and sends the request message, to request the measurement information. For example, the terminal device requests to configure the measurement information in the network, requests to indicate the activated measurement information in the network, or requests to activate the preconfigured measurement information in the network. A function of the request message varies with the triggering condition. Specific examples are used below for description.

**Example 1:** The triggering condition is the first condition.

The terminal device determines that the first condition is satisfied, and sends the request message to the access network device. That is, when the access network device preconfigures the available measurement information, and the preconfigured measurement information satisfies the measurement requirement of the terminal device, the terminal device may initiate the request message. In a possible implementation, the request message may be for requesting the access network device to activate the preconfigured measurement information, and there is no need to request an access network to configure the measurement information, to reduce positioning latency. In another possible implementation, the request message may be for requesting the at least one set of measurement information in the preconfigured measurement information, so that a request success rate can be improved. Before performing positioning measurement, the terminal device may determine whether the first condition is satisfied. If the first condition is satisfied, the terminal device requests the access network device to activate the preconfigured measurement information.

For example, when the access network device preconfigures the MG configuration information and the PPW configuration information, the terminal device may request the access network device to activate at least one set of MG configuration information in the preconfigured MG configuration information, or may request the access network device to activate at least one set of PPW configuration information in the preconfigured PPW configuration information. In embodiments of this application, the terminal device may determine, based on a preconfigured or configured priority sequence, to request to activate the MG configuration information or the PPW configuration information.

A possible priority sequence is that an activation request priority of the PPW configuration information is higher than an activation request priority of the MG configuration information. That is, the terminal device requests to activate the PPW configuration information rather than the MG configuration information. Measurement based on the PPW configuration information is measurement without a measurement gap, and within the duration of the PPW, the terminal device may alternatively measure or process a reference signal other than the positioning reference signal and data. Therefore, the PPW configuration information is preferentially requested to be activated, to reduce impact of positioning on communication.

Another possible priority sequence is that an activation request priority of the MG configuration information is higher than an activation request priority of the PPW configuration information. That is, the terminal device requests to activate the MG configuration information rather than the PPW configuration information. Measurement based on the MG configuration information is performed by using a measurement gap, and a measurement priority sequence between the positioning reference signal, another reference signal, and data does not need to be considered. Therefore, the MG configuration information is preferentially requested to be activated, to reduce processing complexity of the terminal device.

In response to the request message of the terminal device, the access network device may send a response message for the request message to the terminal device. The response message may indicate the activated measurement information. If the measurement information activated by the access network device for the terminal device includes the MG configuration information and the PPW configuration information, the terminal device may alternatively determine, based on the preconfigured or configured priority sequence, to use the MG configuration information or the PPW configuration information.

A possible priority sequence is that a use priority of the MG configuration information is higher than a request priority of the PPW configuration information. That is, the terminal device may perform positioning measurement based on the MG configuration information, and not perform positioning measurement based on the PPW configuration information. It may be understood that the access network device configures or activates the MG configuration information, and the access network device has completed operations such as related resource scheduling and configuration. Therefore, the terminal device uses the MG configuration information to perform positioning measurement, to reduce processing complexity of the terminal device.

Another possible priority sequence is that a use priority of the PPW configuration information is higher than a request priority of the MG configuration information. That is, the terminal device may perform positioning measurement based on the PPW configuration information, and not perform positioning measurement based on the MG configuration information, to reduce impact of positioning on communication.

**Example 2:** The triggering condition is the second condition.

The terminal device determines that the second condition is satisfied, and sends the request message to the access network device. The request message may be for requesting to activate the at least one set of measurement information in the preconfigured measurement information, or the request message is for requesting the measurement information. Before performing positioning measurement, the terminal device may determine whether the second condition is satisfied, to determine a manner based on which the request message is sent to the terminal device. For example, if the terminal device determines that the second condition is satisfied, that is, the access network device allows the terminal device to send the request message via the MAC CE signaling, the terminal device sends the request message via the MAC CE signaling, for example, requests to activate the at least one set of measurement information in the preconfigured measurement information, to reduce positioning latency as much as possible. If the terminal device determines that the second condition is not satisfied, that is, the access network device does not allow the terminal device to send the request message via the MAC CE signaling, in a possible implementation, the terminal device may send the request message based on RRC signaling, for example, to request to activate the at least one set of measurement information in the preconfigured measurement information, or directly request to configure the measurement information in the network.

For example, when the terminal device may request both the MG configuration information and the PPW configuration information from the access network device, the terminal device may determine, based on a preconfigured or configured priority sequence, to request the MG configuration information or the PPW configuration information.

A possible priority sequence is that a request priority of the PPW configuration information is higher than a request priority of the MG configuration information. That is, the terminal device requests the PPW configuration information rather than the MG configuration information, to reduce impact of positioning on communication.

Another possible priority sequence is that a request priority of the MG configuration information is higher than a request priority of the PPW configuration information. That is, the terminal device requests the MG configuration information rather than the PPW configuration information, to reduce processing complexity of the terminal device.

**Example 3:** The triggering condition is the third condition. The terminal device determines that the third condition is satisfied, and sends the request message to the access network device. The request message may be for requesting the access network device to configure the measurement information. To be specific, if the terminal device determines that the access network device has not configured the measurement information, or the measurement information configured or activated by the access network device does not satisfy the measurement requirement of the terminal device, the terminal device requests the access network device to configure the measurement information, to perform positioning measurement.

Before performing positioning measurement, the terminal device may determine whether the third condition is satisfied. If the third condition is satisfied, the terminal device requests the measurement information of the positioning reference signal from the access network device. When the terminal device may request both the MG configuration information and the PPW configuration information from the access network device, the terminal device may determine, based on a preconfigured or configured priority sequence, to request the MG configuration information or the PPW configuration information. This is similar to Example 2. For details, refer to the related content in Example 2. Details are not described herein again.

If the terminal device determines that the third condition is not satisfied, the terminal device may perform positioning measurement. That is, if the terminal device determines that the access network device configures or activates the measurement information, and the configured or activated measurement information of the positioning reference signal satisfies the measurement requirement of the terminal device, the terminal device may perform positioning measurement without requesting the measurement information of the positioning reference signal, to reduce positioning latency. If the access network device configures the MG configuration information and the PPW configuration information for the terminal device, the terminal device may determine, based on a preconfigured or configured priority sequence, to use the MG configuration information or the PPW configuration information. This is similar to Example 1. For details, refer to the related content in Example 1. Details are not described herein again.

**Example 4:** The triggering condition includes the first condition and the third condition. For example, the terminal device determines that the third condition is satisfied but the first condition is not satisfied, and sends the request message to the access network device. The request message may be for requesting to configure the measurement information. Before performing positioning measurement, the terminal device may determine whether the third condition is satisfied. When determining that the third condition is satisfied, the terminal device may continue to determine whether the first condition is satisfied. If the terminal device determines that the first condition is satisfied, the terminal device may alternatively send the request message. The request message may be for requesting to activate the preconfigured measurement information, or the request message may be for requesting the measurement information. That is, satisfying the first condition and the third condition may alternatively be considered as a triggering condition. If the terminal device determines that the first condition is not satisfied, the terminal device sends the request message to the access network device, to request the access network device to configure the measurement information. That is, the terminal device sends the request message to the access network device in any one of the following cases:

Case 1: If the terminal device determines that the measurement information is not configured, and the terminal device determines that the measurement information is not preconfigured or the preconfigured measurement information is unavailable, the terminal device sends the request message.

Case 2: If the terminal device determines that the configured measurement information or the activated measurement information does not satisfy the measurement requirement of the terminal device, and the terminal device determines that the measurement information is not preconfigured or the preconfigured measurement information is unavailable, the terminal device sends the request message to the access network device.

Case 3: If the terminal device determines that the measurement information is not configured, and the terminal device determines that none of the preconfigured measurement information satisfies the measurement requirement of the terminal device, the terminal device sends the request message to the access network device.

Case 4: If the terminal device determines that the configured measurement information or the activated measurement information does not satisfy the measurement requirement of the terminal device, and the terminal device determines that none of the preconfigured measurement information satisfies the measurement requirement of the terminal device, the terminal device sends the request message to the access network device.

Alternatively, before sending the request message, the terminal device may determine whether the first condition is satisfied. On a basis of determining that the first condition is satisfied, the terminal device may further determine whether the third condition is satisfied, to determine whether the request message needs to be sent.

Alternatively, before sending the request message, the terminal device may determine both whether the first condition is satisfied and whether the third condition is satisfied, to determine whether to send the request message to the access network device.

When the terminal device may request both the MG configuration information and the PPW configuration information from the access network device, the terminal device may determine, based on a preconfigured or configured priority sequence, to request the MG configuration information or the PPW configuration information. For details, refer to the related content in Example 2. Details are not described herein again.

**Example 5:** The triggering condition includes the first condition and the second condition.

For example, the terminal device determines that the first condition and the second condition are satisfied, and sends the request message via the MAC CE signaling. The request message is for requesting to activate the preconfigured measurement information.

Before sending the request message, the terminal device may determine whether the first condition is satisfied. On a basis of determining that the first condition is satisfied, the terminal device may further determine whether the second condition is satisfied, to determine whether to send the request message to the terminal device and determine a manner based on which the request message is sent to the terminal device. If the second condition is satisfied, that is, the access network device allows the terminal device to send the request message via the MAC CE signaling, the terminal device sends the request message via the MAC CE signaling, to reduce positioning latency as much as possible. If the second condition is not satisfied, that is, the access network device does not allow the terminal device to send the request message via the MAC CE signaling, in a possible implementation, the terminal device may send the request message based on RRC signaling. It should be noted that satisfying the first condition but not satisfying the second condition may alternatively be considered as a triggering condition. That is, when being triggered by a case in which the first condition is satisfied but the second condition is not satisfied, the terminal device sends the request message based on the RRC signaling.

Alternatively, before the terminal device sends the request message, the terminal device may determine whether the second condition is satisfied. On a basis of determining that the second condition is satisfied, the terminal device may further determine whether the first condition is satisfied, to determine to send the request message to the access network device via the MAC CE signaling.

Alternatively, before the terminal device sends the request message, the terminal device may determine both whether the first condition is satisfied and whether the second condition is satisfied, to determine whether to send the request message to the access network device and determine a manner based on which the request message is sent.

When the terminal device may request the access network device to activate both the MG configuration information and the PPW configuration information, the terminal device may determine, based on a preconfigured or configured priority sequence, to request to activate the MG configuration information or the PPW configuration information. This is similar to Example 1. For details, refer to the related content in Example 1. Details are not described herein again.

**Example 6:** The triggering condition includes the second condition and the third condition.

For example, the terminal device determines that the second condition and the third condition are satisfied, and sends the request message via the MAC CE signaling. The request message is for requesting the measurement information.

Before sending the request message, the terminal device may determine whether the third condition is satisfied. On a basis of determining that the third condition is satisfied, the terminal device may further determine whether the second condition is satisfied, to determine a manner based on which the request message is sent to the terminal device. If the second condition is satisfied, that is, the access network device allows the terminal device to send the request message via the MAC CE signaling, the terminal device sends the request message via the MAC CE signaling, to reduce positioning latency as much as possible. If the second condition is not satisfied, that is, the access network device does not allow the terminal device to send the request message via the MAC CE signaling, the terminal device may send the request message based on RRC signaling. It should be noted that satisfying the third condition but not satisfying the second condition may alternatively be considered as a triggering condition. That is, when being triggered by a case in which the third condition is satisfied but the second condition is not satisfied, the terminal device sends the request message based on the RRC signaling.

Alternatively, before sending the request message, the terminal device may determine whether the second condition is satisfied. On a basis of determining that the second condition is satisfied, the terminal device may further determine whether the third condition is satisfied, to determine to send the request message to the access network device via the MAC CE signaling.

Alternatively, before sending the request message, the terminal device may determine both whether the first condition is satisfied and whether the third condition is satisfied, to determine whether to send the request message to the access network device and determine a manner based on which the request message is sent.

When the terminal device may request the access network device to activate both the MG configuration information and the PPW configuration information, the terminal device may determine, based on a preconfigured or configured priority sequence, to request to activate the MG configuration information or the PPW configuration information. This is similar to Example 1. For details, refer to the related content in Example 1. Details are not described herein again.

Example 7: The triggering condition includes the first condition, the second condition, and the third condition.

When determining that the first condition, the second condition, and the third condition are satisfied, the terminal device sends the request message to the access network device. The request message may be for requesting to activate the measurement information preconfigured by the access network device.

Before performing positioning measurement, the terminal device may determine whether the third condition is satisfied, and then determine, if the terminal device determines that the third condition is satisfied, whether the first condition is satisfied. If the terminal device determines that the first condition is satisfied, the terminal device then determines whether the second condition is satisfied, to determine a manner based on which the request message is sent to the terminal device. If the second condition is satisfied, that is, the access network device allows the terminal device to send the request message via the MAC CE signaling, the terminal device sends the request message via the MAC CE signaling, to reduce positioning latency as much as possible. If the second condition is not satisfied, that is, the access network device does not allow the terminal device to send the request message via the MAC CE signaling, the terminal device may send the request message based on RRC signaling.

It should be noted that satisfying the first condition and the third condition but not satisfying the second condition may alternatively be considered as a triggering condition. That is, when being triggered by a case in which the first condition and the third condition are satisfied but the second condition is not satisfied, the terminal device sends the request message based on the RRC signaling. In addition, a sequence of determining the first condition, the second condition, and the third condition by the terminal device is not limited in embodiments of this application.

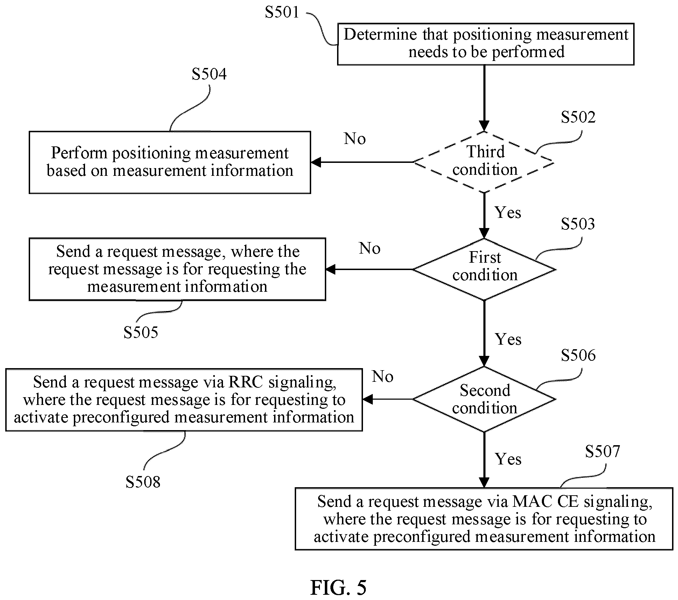

To better understand the technical solutions provided in embodiments of this application, the following describes an example of the communication method provided in embodiments of this application. FIG. 5 is a flowchart of the method. In a procedure shown in FIG. 5, an example in which a device that needs to perform positioning measurement is a terminal device is used.

S501: Determine that the positioning measurement needs to be performed.

For example, the terminal device receives a request location message, for example, an LPP *RequestLocationInformation* message sent by an LMF, and may determine that the positioning measurement needs to be performed.

S502: Determine whether a third condition is satisfied.

It should be noted that a triggering condition may not include the third condition. Therefore, S502 is shown by a dashed line.

S503: If it is determined that the third condition is satisfied, determine whether a first condition is satisfied.

S504: If it is determined that the third condition is not satisfied, perform positioning measurement based on measurement information.

If the terminal device determines that the third condition is not satisfied, the terminal device may perform positioning measurement based on MG configuration information and/or PPW configuration information. For example, if an access network device configures the MG configuration information and the PPW configuration information for the terminal device, the terminal device may determine, based on a preconfigured or configured priority sequence, to use the MG configuration information or the PPW configuration information. For details, refer to the related content in Example 1. Details are not described herein again.

S505: If it is determined that the third condition is satisfied but the first condition is not satisfied, send a request message, where the request message is for requesting the measurement information.

S506: If it is determined that the third condition and the first condition are satisfied, determine whether a second condition is satisfied.

S507: If it is determined that the third condition, the first condition, and the second condition are satisfied, send a request message based on MAC CE signaling, where the request message is for requesting to activate preconfigured measurement information.

S508: If it is determined that the third condition and the first condition are satisfied but the second condition is not satisfied, send a request message based on RRC signaling, where the request message is for requesting to activate preconfigured measurement information.

It should be noted that, in FIG. 5, an example in which the triggering condition includes the first condition and the second condition is used. Therefore, in FIG. 5, S505 to S507 are all shown by solid lines. It should be understood that the terminal device may alternatively not perform one or more steps in S505 to S507.

FIG. 5 shows only an example of a determining sequence of the first condition, the second condition, and the third condition. The determining sequence of the first condition, the second condition, and the third condition is not limited in this embodiment of this application, and which conditions in the first condition, the second condition, and the third condition are determined is not limited. For example, the terminal device may determine one or more conditions in the first condition, the second condition, and the third condition. For example, the terminal device may first determine whether the second condition is satisfied (that is, S506), and then determine whether the first condition is satisfied (that is, S503). Alternatively, if the terminal device does not perform S502 and S504, the terminal device may determine, after performing S501, whether the first condition is satisfied (that is, S503), and perform S505 if the terminal device determines that the first condition is not satisfied. Alternatively, if the terminal device does not perform S502 and S504, the terminal device may determine, after performing S501, whether the first condition is satisfied, and perform S506 to S508 when determining that the first condition is satisfied. For another example, if the terminal device does not perform S502 and S504, the terminal device may determine, after performing S501, whether the second condition is satisfied (that is, S506), and then perform S507 or S508.

In this embodiment of this application, the terminal device requests the access network device to activate the preconfigured measurement information only when determining that the triggering condition is satisfied, to avoid requesting the access network device to activate the preconfigured measurement information when the triggering condition is not satisfied, so that a success rate of obtaining the measurement information can be improved. In addition, when both the MG configuration information and the PPW configuration information exist, the MG configuration information is preferentially used to perform positioning measurement, to reduce processing complexity of the terminal device. When both the MG configuration information and the PPW configuration information are configured, the PPW configuration information is preferentially requested; and when both the MG configuration information and the PPW configuration information are preconfigured, the PPW configuration information is preferentially requested to be activated, to reduce impact on communication data transmission.

An example in which the request message is for requesting the measurement information or the request message is for requesting to activate the preconfigured measurement information is used above. In a possible implementation, a request message sent by the terminal device may alternatively be for requesting to deactivate configured or activated measurement information. It should be understood that the terminal device does not use successfully "deactivated" measurement information. For example, the terminal device no longer needs the configured or activated measurement information. For example, the positioning measurement ends, or some configured or activated measurement information has been sufficient to satisfy a measurement requirement. The terminal device may initiate a deactivation request. In this way, a network resource can be released, resource utilization can be improved, and measurement complexity of the terminal can be reduced.

Therefore, in this embodiment of this application, a triggering condition for the terminal device to request to deactivate the configured or activated measurement information may alternatively be set, and the terminal device sends the deactivation request only when determining that the triggering condition is satisfied, to avoid requesting the measurement information from the access network device when the triggering condition is not satisfied, so that a success rate of deactivating the measurement information can be improved, and a waste of the network resource can be avoided.

For example, the terminal device determines that a fourth condition and/or a fifth condition are/is satisfied, and sends a request message. The request message is for requesting to deactivate at least one set of measurement information. For example, the request message is for requesting to deactivate at least one set of measurement information in the configured measurement information, or the request message is for requesting to deactivate at least one set of measurement information in the activated measurement information.

The fourth condition is that the measurement information is no longer needed. It may alternatively be understood as that the fourth condition is that the configured measurement information or the activated measurement information is no longer needed. For example, if the terminal device receives a message for stopping or ending measurement, it is alternatively considered that the measurement information is no longer needed. From this perspective, receiving the message for stopping or ending the measurement may alternatively be used as the fourth condition. When the terminal device determines that the fourth condition is satisfied, that is, the terminal device does not need the configured or activated measurement information, the terminal device requests to deactivate some measurement information, to release a network resource, improve resource utilization, and reduce measurement complexity of the terminal.

The fifth condition is that there is activated measurement information currently. It should be understood that, that there is activated measurement information currently means that the measurement information is preconfigured and that one or more sets of preconfigured measurement information are activated in a network. For example, the one or more sets of preconfigured measurement information are activated by using the MAC CE signaling or the RRC signaling. Alternatively, the fifth condition may be that the measurement information is allowed to be requested to be deactivated. If the measurement information is allowed to be requested to be deactivated, it may alternatively be considered that there is activated measurement information or configured measurement information. Optionally, the fifth condition is that the measurement information is allowed to be requested, by using the MAC CE signaling, to be deactivated. It may alternatively be understood as that the fifth condition is that the terminal device is allowed to request, by using the MAC CE signaling, to deactivate the configured or successfully activated measurement information, or the fifth condition is that the terminal device requests, by using the MAC CE signaling, to deactivate measurement. When the terminal device determines the fifth condition, the terminal device may send the deactivation request based on the MAC CE signaling, to reduce positioning latency. When the terminal device determines that the fifth condition is not satisfied, the terminal device may send the deactivation request based on the RRC signaling. Optionally, the fifth condition is that the measurement information is allowed to be requested, by using the RRC signaling, to be deactivated. It may alternatively be understood as that the fifth condition is that the terminal device is allowed to request, by using the RRC signaling, to deactivate the configured or successfully activated measurement information, or the fifth condition is that the terminal device requests, by using the RRC signaling, to deactivate measurement. Optionally, when the activated measurement information is activated by using the MAC CE signaling, the measurement information is accordingly allowed to be deactivated by using the MAC CE signaling. Optionally, when the activated measurement information is activated by using the RRC signaling, the measurement information is accordingly allowed to be deactivated by using the RRC signaling.

Before initiating the request message, the terminal device may determine whether the fourth condition is satisfied. If the fourth condition is satisfied to send the request message, the terminal device may send the request message. Alternatively, after determining that the fourth condition is satisfied, the terminal device may further determine whether the fifth condition is satisfied, to determine a manner based on which the request message is sent to the terminal device. If the fifth condition is satisfied, the terminal device may send the request message via the MAC CE signaling, to reduce the positioning latency as much as possible. If the fifth condition is not satisfied, the terminal device may send the request message based on the RRC signaling.

Alternatively, before initiating the request message, the terminal device may determine whether the fifth condition is satisfied. After determining that the fifth condition is satisfied, the terminal device may further determine whether the fourth condition is satisfied, to determine whether to send the request message via the MAC CE signaling.

Alternatively, before sending the request message, the terminal device may determine both whether the fourth condition is satisfied and whether the fifth condition is satisfied, to determine whether to send the request message and determine a manner based on which the request message is sent.

It takes time for the access network device to determine to measure the configuration information and send the measurement information. Therefore, within a period of time after sending the request message, the terminal device may first wait a response message from the network, and does not need to send a request message again during a waiting period, to avoid frequently initiating requests by the terminal device, thereby reducing energy consumption of the terminal device as much as possible.

In a possible implementation, when determining that the request message needs to be sent, the terminal device may start (or restart) a first timer. Alternatively, after determining that the request message needs to be sent, the terminal device may start (or restart) a first timer. For ease of description, in the following descriptions, that the terminal device starts the first timer is used as an example. Unless otherwise specified, that the terminal device starts the first timer may be replaced with that the terminal device restarts the first timer. For example, after performing S503 or S506, the terminal device starts the first timer. Alternatively, when sending the request message, the terminal device may start the first timer. Alternatively, after sending the request message, the terminal device may start the first timer. For example, after performing S505, S507, or S508, the terminal device starts the first timer. In this way, within a period of duration (for example, a working period of the first timer) after the terminal device sends the request message, the terminal device does not need to send a request message again, to avoid frequent sending of request messages, and reduce the energy consumption of the terminal device.

A parameter of the first timer may be predefined, the parameter of the first timer may be preconfigured in the network, or the parameter of the first timer may be configured in the network. For example, the parameter of the first timer may be configured or preconfigured by the access network device or a location management device. The access network device may configure the parameter of the first timer based on the RRC signaling, and the location management device may configure the parameter of the first timer based on an LPP message. The parameter of the first timer may include one or more items such as first timing duration, a maximum quantity of times of sending request messages, or a maximum quantity of sets of requested measurement information. The first timing duration may be understood as duration from starting to expiration of the first timer. The maximum quantity of times of sending the request messages may be understood as a maximum quantity of times that the terminal device is allowed to send the request messages. Similarly, the maximum quantity of sets of requested measurement information may be understood as a maximum quantity of sets of measurement information that the terminal device is allowed to request.

Measurement information requested by using request messages sent by the terminal device at different moments may be the same. For example, the terminal device sends a first request message at a first moment, where the first request message may be for requesting first measurement information; and the terminal device sends a second request message at a second moment, where the second request message may be for requesting second measurement information. The first measurement information and the second measurement information may be the same. In other words, the maximum quantity of times of sending the request messages and the maximum quantity of sets of requested measurement information may be different. Certainly, measurement information requested by using request messages sent by the terminal device at different moments may alternatively be different. For example, the terminal device sends a first request message at a first moment, where the first request message may be for requesting first measurement information; and the terminal device sends a second request message at a second moment, where the second request message may be for requesting second measurement information. The first measurement information and the second measurement information are different. It may alternatively be considered that measurement information requested by the terminal device at a later moment may be previously requested to be configured or previously requested to be activated, or may be not previously requested to be configured or activated.

When the terminal device determines that the request message needs to be sent, or after the terminal device determines that the request message needs to be sent, a quantity of times that the terminal device sends request messages may be accumulated. Alternatively, when the terminal device determines that the request message needs to be sent, or after the terminal device determines that the request message needs to be sent, a quantity of sets of measurement information requested by the terminal device may be accumulated. Alternatively, when the terminal device determines that the request message needs to be sent, or after the terminal device determines that the request message needs to be sent, both a quantity of times that the terminal device sends request messages and a quantity of sets of measurement information requested by the terminal device may be accumulated. When the accumulated quantity of times that the terminal device sends the request messages reaches the maximum quantity of times of sending the request messages, the first timer ends. Alternatively, when the accumulated quantity of sets of measurement information requested by the terminal device reaches the maximum quantity of sets of requested measurement information, the first timer ends. When the accumulated quantity of times that the terminal device sends the request messages reaches the maximum quantity of times of sending the request messages, and the accumulated quantity of sets of measurement information requested by the terminal device reaches the maximum quantity of sets of requested measurement information, the first timer ends. When duration of the first timer reaches the first timing duration (which may alternatively be considered that the first timer expires), the first timer stops. After the terminal device starts the first timer, the terminal device can obtain the measurement information if the terminal device receives the response message for the request message, for example, a message for reconfiguring the measurement information by the access network device or a message for activating the preconfigured measurement information by the access network device, so that the terminal device does not need to continue to wait the timer, and can stop the first timer. Therefore, when the terminal device receives the response message or after the terminal device receives the response message, the first timer ends. It should be understood that longest duration from the starting to the ending of the first timer does not exceed longest duration from the starting to the expiration of the first timer, namely, the first timing duration.

It may alternatively be considered that, that the accumulated quantity of times that the terminal device sends the request messages reaches the maximum quantity of times of sending the request messages is an ending condition of the first timer, for example, referred to as a first ending condition. Similarly, that the accumulated quantity of sets of measurement information requested by the terminal device reaches the maximum quantity of sets of requested measurement information is referred to as a second ending condition. That the accumulated quantity of times that the terminal device sends the request messages reaches the maximum quantity of times of sending the request messages and that the accumulated quantity of sets of measurement information requested by the terminal device reaches the maximum quantity of sets of requested measurement information are referred to as a third ending condition. That the first timer expires is referred to as a fourth ending condition. When the terminal device receives the response message or after the terminal device receives the response message, this is referred to as a fifth ending condition.

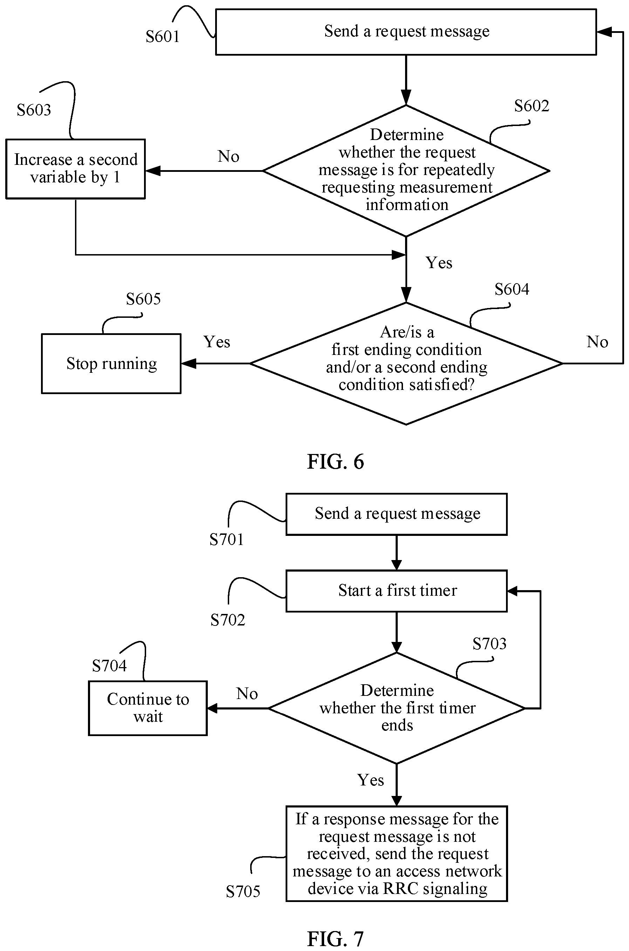

FIG. 6 is a diagram of a working procedure of a first timer according to an embodiment of this application. It should be understood that, in FIG. 6, an example in which an ending condition of the first timer includes a first ending condition and a second ending condition is used. FIG. 6 relates to two variables of the first timer, namely, a first variable (ActiMG_TransCOUNTER) and a second variable (ActiMG_ReqCOUNTER), where the first variable indicates a quantity of times that a terminal device sends request messages, and the second variable indicates a quantity of sets of measurement information requested by the terminal device. When the terminal device sends a request message once, the first variable is increased by 1. When the measurement information requested by the terminal device is different from previously requested measurement information, the second variable is increased by 1. Initial values of the first variable and the second variable are 0.

S601: Send the request message. Optionally, the first variable is increased by 1.

S602: Determine whether the request message is for repeatedly requesting the measurement information. That is, whether the measurement information requested by using the request message is the same as the previously requested measurement information is determined.

S603: If it is determined that the request message is not for repeatedly requesting the measurement information, increase the second variable by 1. It should be noted that, after S603, proceed to S604. That is, whether the first ending condition and/or the second ending condition are/is satisfied is determined.

S604: If it is determined that the request message is for repeatedly requesting the measurement information, determine whether the first ending condition and/or the second ending condition are/is satisfied.

S605: If it is determined that the first ending condition and/or the second ending condition are/is satisfied, stop running.

If the first ending condition and/or the second ending condition are/is not satisfied, S601 continues to be performed.

Accordingly, FIG. 7 is a flowchart of using a first timer according to an embodiment of this application. In FIG. 7, an example in which an ending condition of the first timer does not include a fourth ending condition is used.

S701: Send a request message.

For example, a terminal device sends the request message. S701 may be S507 in FIG. 5.

S702: Start the first timer.

It should be understood that, after the first timer is started, the procedure shown in FIG. 6 may be performed by using the first timer.

S703: Determine whether the first timer ends.

For example, the terminal device needs to send the request message. Before the first timer expires, if the terminal device receives a response message for the request message, the terminal device may determine that the first timer ends. The procedure shown in FIG. 6 is performed by using the first timer. If that the first ending condition and/or the second ending condition are/is satisfied is determined by using the first timer, the terminal device may be notified that the first timer ends.

S704: If it is determined that the first timer does not end, continue to wait.

S705: If it is determined that the first timer ends, and the response message for the request message is not received, send the request message via RRC signaling. It should be understood that, in FIG. 7, the example in which the ending condition of the first timer does not include the fourth ending condition is used. If the ending condition of the first timer includes the fourth ending condition, S701 continues, after the first timer stops, to be performed.

If the terminal device has not received the response message for the request message after the first timer ends, it may be considered that the access network device has not activated the preconfigured measurement information that the terminal device requests to activate. In this case, the terminal device may request the measurement information from the access network device by using the RRC signaling. For example, the terminal device may determine whether the access network device activates the measurement information, or determine whether the measurement information configured or activated by the access network device satisfies the measurement requirement. If the terminal device determines that the access network device does not activate the measurement information, or the terminal device determines that the measurement information activated or configured by the access network device does not satisfy the measurement requirement, the terminal device may send a request message to the access network device again.

If the response message is not received within preset duration, it may be considered that the terminal device does not obtain the measurement information, that is, the terminal device fails to obtain the measurement information. In this case, the terminal device may send a failure message, where the failure message indicates that obtaining of the measurement information fails. That the failure message indicates that the obtaining of the measurement information fails may alternatively be understood as that the failure message indicates that the positioning measurement fails, or indicates that a measurement result or a positioning result cannot be provided. In this way, the access network device can determine that positioning of the terminal device fails, so that the measurement information can be subsequently reconfigured for the terminal device, to improve, as much as possible, the success rate of obtaining the measurement information by the terminal device. Optionally, the failure message may indicate a reason for failing to perform positioning measurement, and provide a reference for reconfiguring the measurement information in the network.

The preset duration may be preconfigured, or may be configured by the access network device, or the preset duration may be implemented by using a timer. This is not limited in embodiments of this application.

Because it takes time for the access network device to determine the measurement information and send the measurement information, in a process in which the terminal device determines, according to, for example, the procedure shown in FIG. 5, whether the request message needs to be sent, or within a period of time after the terminal device sends the request message, the access network device may have configured the measurement information for the terminal device or sent an indication for activating the preconfigured measurement information to the terminal device. In this case, if the terminal device still determines, based on the triggering condition, whether to send the request message to the access network device, an unnecessary request message is sent, or the request message is sent in advance, which causes timing latency.

Therefore, before sending the request message, the terminal device may start a second timer. It may alternatively be understood as that time is reserved, by using the second timer, for the access network device to configure the measurement information or activate the preconfigured measurement information. In this way, before the second timer expires, if the measurement information is configured or the preconfigured measurement information is activated in the network, the terminal device does not need to send the request message, to reduce the positioning latency. It may be understood that the terminal device stops the second timer when receiving the response message or after receiving the response message for the request message.

A parameter of the second timer may be predefined, or may be preconfigured or configured in the network. For example, the parameter of the second timer may be preconfigured or configured by the access network device or the location management device. The access network device may configure the parameter of the second timer based on the RRC signaling, and the location management device may configure the parameter of the second timer based on the LPP message. For example, the parameter of the second timer includes second timing duration of the second timer, that is, duration from starting to expiration of the second timer.

Optionally, after performing S501, the terminal device may start the second timer. Alternatively, at any moment before performing S507 or S508, the terminal device may start the second timer. For example, before performing S502, S503, or S506, the terminal device may start the second timer. For the terminal device, before the request message is sent, the second timer is started. If the second timer does not expire, the terminal device continues to wait. If the second timer expires, the terminal device sends the request message. FIG. 5 is used as an example. The terminal device starts the second timer after performing S501 and before performing S502. The terminal device may perform S502 and steps after S502 when the second timer expires. If the terminal device starts the second timer before performing S503, the terminal device may perform S503 and steps after S503 when the second timer expires. If the terminal device starts the second timer before performing S506, the terminal device may perform S506 and steps after S506 when the second timer expires.

It should be noted that a solution in which the terminal device starts the first timer may be independent of the foregoing solution in which the terminal device determines that the triggering condition is satisfied and sends the request message. In other words, in a possible implementation, the terminal device does not need to determine whether the triggering condition is satisfied, and starts the first timer provided that the terminal device sends the request message. In a possible implementation, the terminal device only determines whether the triggering condition is satisfied, and does not need to start the first timer.

Similarly, a solution in which the terminal device starts the second timer may be independent of the foregoing solution in which the terminal device determines that the triggering condition is satisfied and sends the request message. In other words, in a possible implementation, the terminal device does not need to determine whether the triggering condition is satisfied, and starts the second timer provided that the terminal device determines to send the request message. A solution in which the terminal device starts the first timer when sending the request message or after sending the request message may alternatively be independent of a solution in which the terminal device starts the second timer before sending the request message.

Certainly, a solution in which the terminal device starts the first timer and a solution in which the terminal device starts the second timer may be mutually combined. It should be noted that an example in which the terminal device starts the first timer and the second timer is used in embodiments of this application. An execution body that starts the first timer and the second timer is not limited in embodiments of this application. In embodiments of this application, an example in which the terminal device performs positioning measurement is used, and an example in which the terminal device sends the request message to the access network device is used. A device that performs positioning measurement is not limited in embodiments of this application, and to whom the device sends the request message is not limited either. For example, the request message may be sent to the LMF.

In embodiments provided in this application, the methods provided in embodiments of this application are described by using a case in which the terminal device performs positioning measurement. To implement functions in the methods provided in the foregoing embodiments of this application, the terminal device and the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on a specific application and a design constraint condition of the technical solutions.

The following describes, with reference to accompanying drawings, communication apparatuses configured to implement the foregoing methods in embodiments of this application.

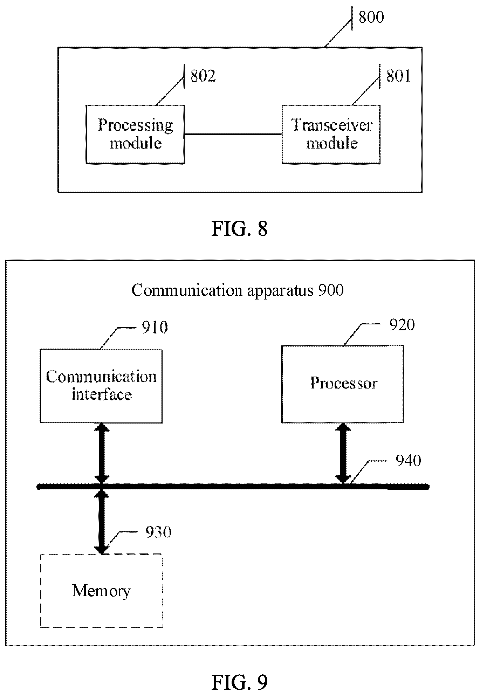

FIG. 8 is a possible example block diagram of a communication apparatus in this application. The communication apparatus 800 may accordingly implement functions or steps implemented by the terminal device in the foregoing method embodiments. The communication apparatus may include a transceiver module 801 and a processing module 802. Optionally, the communication apparatus may further include a storage module. The storage module may be configured to store instructions (code or programs) and/or data. The transceiver module 801 and the processing module 802 may be coupled to the storage module. For example, the processing module 802 may read the instructions (the code or the programs) and/or the data in the storage module, to implement the corresponding methods. The foregoing modules may be independently disposed, or may be partially or completely integrated.

It should be understood that the processing module 802 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 802 may implement or execute various example logical blocks, modules, and circuits described with reference to content disclosed in this application. The processor may alternatively be a combination of processors implementing a computing function, for example, a combination of one or more microprocessors or a combination of the DSP and a microprocessor. The transceiver module 801 is an interface circuit of the apparatus, and is configured to receive a signal from another apparatus. For example, when the apparatus is implemented in a form of a chip, the transceiver module 801 is an interface circuit used by the chip to receive a signal from another chip or apparatus, or is an interface circuit used by the chip to send a signal to another chip or apparatus.

The communication apparatus 800 may be the network device or the terminal device in the foregoing embodiments, or may be a chip configured to implement a function of the network device or the terminal device in the foregoing embodiments. For example, when the communication apparatus 800 is the network device or the terminal device, the processing module 802 may be, for example, a processor, and the transceiver module 801 may be, for example, a transceiver. Optionally, the transceiver may include a radio frequency circuit, and a storage unit may be, for example, a memory. For example, when the communication apparatus 800 is the chip configured to implement the function of the network device or the terminal device, the processing module 802 may be, for example, a processor, and the transceiver module 801 may be, for example, an input/output interface, a pin, or a circuit. The processing module 802 may execute computer-executable instructions stored in the storage unit. Optionally, the storage unit is a storage unit in the chip, for example, a register or a cache. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some possible implementations, the communication apparatus 800 can accordingly implement the behavior and the function of the terminal device in the foregoing method embodiments. For example, the communication apparatus 800 may be the terminal device, or may be a component (for example, a chip or a circuit) used in the terminal device. The transceiver module 801 may be configured to support communication between the terminal device and another network entity, for example, support communication between the terminal device and a network device and/or a location management device. For example, the transceiver module 801 may be configured to perform all receiving or sending operations performed by the terminal device in the embodiment shown in FIG. 5, for example, S504, S505, S507, and S508 in the embodiment shown in FIG. 5, and/or configured to support another process of the technology in this specification. For another example, the transceiver module 801 may be configured to perform all receiving or sending operations performed by the terminal device in the embodiment shown in FIG. 7, for example, S701 and S705 in the embodiment shown in FIG. 7, and/or configured to support another process of the technology in this specification. The processing module 802 is configured to control and manage an action of the terminal device. For example, the processing module 802 is configured to support the terminal device in performing all operations other than receiving and sending in FIG. 5, for example, S501, S502, S503, and S506 in the embodiment shown in FIG. 5, and/or configured to support another process of the technology in this specification. For another example, the processing module 802 is configured to support the terminal device in performing all operations other than receiving and sending in FIG. 7, for example, S702, S703, and S704 in the embodiment shown in FIG. 7, and/or configured to support another process of the technology in this specification.

In some embodiments, the processing module 802 is configured to determine that a first condition and/or a second condition are/is satisfied, where the first condition is that preconfigured measurement information is available and that at least one set of measurement information in the preconfigured measurement information satisfies a measurement requirement of the terminal device. The second condition is that an access network device allows the terminal device to request, via MAC CE signaling, to activate the preconfigured measurement information. The transceiver module 801 is configured to send a request message, where the request message may be for requesting to activate the at least one set of measurement information in the preconfigured measurement information, or the request message may be for requesting the measurement information, where the measurement information is measurement information of a positioning reference signal.

In some other embodiments, the processing module 802 is configured to determine that a third condition is satisfied, where the third condition is that measurement information of a positioning reference signal is not configured or not activated in a network or that measurement information that is of a positioning reference signal and that is configured or activated in a network does not satisfy a measurement requirement of the terminal device. The transceiver module 801 is configured to send a request message, where the request message is for requesting the measurement information of the positioning reference signal.

In some other embodiments, the processing module 802 is configured to determine that a fourth condition and/or a fifth condition are/is satisfied. The transceiver module 801 is configured to send a request message, where the request message is for requesting to deactivate at least one set of measurement information. For example, the request message is for requesting to deactivate at least one set of measurement information in configured measurement information, or the request message is for requesting to deactivate at least one set of measurement information in activated measurement information. The fourth condition is that a message for stopping or ending measurement is received, or the fourth condition is that measurement information is no longer needed. It may alternatively be understood as that the fourth condition is that the configured measurement information or the activated measurement information is no longer needed. The fifth condition is that there is activated measurement information currently or that the measurement information is allowed to be requested to be deactivated. It may alternatively be understood as that the fifth condition is that the terminal device is allowed to request to deactivate the configured or successfully activated measurement information.

In an optional implementation, the processing module 802 is configured to determine that the measurement information of the positioning reference signal is configured and that the measurement information of the positioning reference signal satisfies the measurement requirement of the terminal device, and perform positioning measurement.

In an optional implementation, the measurement information includes MG configuration information and PPW configuration information, and the processing module 802 is configured to perform positioning measurement based on the MG configuration information, and not perform positioning measurement based on the PPW configuration information.

In an optional implementation, the processing module 802 is configured to determine that the third condition is satisfied but the first condition is not satisfied. The transceiver module 801 is configured to send the request message, where the request message is for requesting the measurement information of the positioning reference signal.

In an optional implementation, the measurement information includes the MG configuration information and the PPW configuration information, and the request message may be for requesting the PPW configuration information rather than the MG configuration information.

In an optional implementation, the processing module 802 is configured to determine that the third condition and the first condition are satisfied. The transceiver module 801 sends the request message, where the request message is for requesting to activate the at least one set of measurement information in the preconfigured measurement information.

In an optional implementation, if the processing module 802 determines that the second condition is satisfied, the transceiver module 801 sends the request message based on the MAC CE signaling. If the processing module 802 determines that the second condition is not satisfied, the transceiver module 801 initiates the request message based on RRC signaling.

In an optional implementation, the preconfigured measurement information includes the MG configuration information and the PPW configuration information, and the request message may be for requesting to activate the preconfigured PPW configuration information rather than the preconfigured MG configuration information.

In an optional implementation, the processing module 802 is configured to determine to start a first timer when the request message is sent, or the processing module 802 is configured to determine to start a first timer after the request message is sent.

In an optional implementation, the processing module 802 determines to stop the first timer when the transceiver module 801 receives a response message or after the transceiver module 801 receives the response message, where the response message is a response message for the request message.

In an optional implementation, the first timer includes one or more of the following parameters: first timing duration, a maximum quantity of times of sending request messages, or a maximum quantity of sets of requested measurement information.

In an optional implementation, the transceiver module 801 is configured to send a failure message if the response message is not received within preset duration, where the failure message indicates that the positioning measurement fails.

In an optional implementation, the processing module 802 is configured to start a second timer before the request message is sent.

In an optional implementation, the processing module 802 determines to stop the second timer when the transceiver module 801 receives the response message or after the transceiver module 801 receives the response message, where the response message is the response message for the request message.

In an optional implementation, a parameter of the second timer includes second timing duration.

In some possible implementations, the communication apparatus 800 can accordingly implement the behavior and the function of the access network device in the foregoing method embodiments. For example, the communication apparatus 800 may be an access network device, or may be a component (for example, a chip or a circuit) used in the access network device. The transceiver module 801 may be configured to support communication between the access network device and another network entity, for example, support communication between the access network device and a terminal device or a location management device. The processing module 802 is configured to control and manage an action of the access network device. For example, the processing module 802 is configured to support the network device in performing all operations other than receiving and sending in FIG. 5.

For example, the transceiver module 801 may be configured to receive a request message sent by the terminal device, where the request message is for requesting to activate at least one set of measurement information in preconfigured measurement information, or the request message is for requesting measurement information; and the measurement information includes MG configuration information and/or PPW configuration information. The processing module 802 is configured to determine that the terminal device determines that a first condition and/or a second condition are/is satisfied, where the first condition is that the preconfigured measurement information is available and that the at least one set of measurement information in the preconfigured measurement information satisfies a measurement requirement, and the second condition is that the preconfigured measurement information is allowed to be requested, via MAC CE signaling, to be activated. Optionally, the transceiver module 801 is further configured to send a response message for the request message.

In an optional implementation, the request message is for requesting measurement information of a positioning reference signal, and the processing module 802 is configured to determine that the terminal device determines that a third condition is satisfied but the first condition is not satisfied, where the third condition is that the measurement information of the positioning reference signal is not configured, or the third condition is that the measurement information of the positioning reference signal does not satisfy the measurement requirement.

In an optional implementation, the measurement information includes the MG configuration information and the PPW configuration information, and the request message is for requesting the PPW configuration information.

In an optional implementation, the request message is for requesting to activate the at least one set of measurement information in the preconfigured measurement information, and the processing module 802 is configured to determine that the terminal device determines that the first condition and the third condition are satisfied.

In an optional implementation, the transceiver module 801 is specifically configured to receive a request message sent based on the MAC CE signaling, and the processing module 802 is configured to determine that the terminal device satisfies the second condition. Alternatively, the transceiver module 801 is specifically configured to receive a request message sent based on RRC signaling, and the processing module 802 is configured to determine that the terminal device determines that the second condition is not satisfied.

In an optional implementation, the preconfigured measurement information includes the preconfigured MG configuration information and the preconfigured PPW configuration information, and the request message is for requesting to activate the preconfigured PPW configuration information.

In an optional implementation, the processing module 802 is further configured to configure a parameter of a first timer, where the parameter of the first timer includes one or more of the following: first timing duration, a maximum quantity of times of sending request messages, or a maximum quantity of sets of requested measurement information.

In an optional implementation, the processing module 802 is further configured to configure a parameter of a second timer, where the parameter of the second timer includes second timing duration.

It should be understood that the processing module 802 in this embodiment of this application may be implemented by a processor or a processor-related circuit component, and the transceiver module 801 may be implemented by a transceiver or a transceiver-related circuit component.

An embodiment of this application further provides a communication system. Specifically, the communication system includes an access network device, a terminal device, and a location management device, or may include more access network devices, more terminal devices, and more location management devices. For example, the communication system includes an access network device, a terminal device, and a location management device that are configured to implement related functions in the embodiment in FIG. 5. The access network device is separately configured to implement some functions related to the network device in embodiments of this application. The terminal device is configured to implement some functions related to the terminal device in embodiments of this application, for example, configured to implement functions related to the terminal device in the embodiment shown in FIG. 5 or FIG. 7. The location management device is configured to implement some functions of the location management device. For details, refer to the related descriptions in the foregoing method embodiments. Details are not described herein again.

FIG. 9 shows a communication apparatus 900 according to an embodiment of this application. The communication apparatus 900 may be a network device, and can implement a function of the network device in the methods provided in embodiments of this application. Alternatively, the communication apparatus 900 may be a terminal device, and can implement a function of the terminal device in the method provided in embodiments of this application. Alternatively, the communication apparatus 900 may be an apparatus that can support a network device or a terminal device in implementing a corresponding function in the methods provided in embodiments of this application. The communication apparatus 900 may be a chip system. In this embodiment of this application, the chip system may consist of a chip, or may include the chip and another discrete component.

In hardware implementation, the transceiver module 801 may be a transceiver, and the transceiver is integrated into the communication apparatus 900 to form a communication interface 910.

The communication apparatus 900 includes at least one processor 920. The processor 920 may be a CPU, a microprocessor, an ASIC, or one or more integrated circuits configured to control program execution of the solutions in this application, and is configured to implement or support the communication apparatus 900 in implementing the function of the access network device or the terminal device in the methods provided in embodiments of this application. For details, refer to the detailed descriptions in the method examples. Details are not described herein again.

The communication apparatus 900 may further include at least one memory 930, configured to store program instructions and/or data. The memory 930 is coupled to the processor 920. Coupling in this embodiment of this application may be indirect coupling or a communication connection between apparatuses, units, or modules in an electrical form, a mechanical form, or another form, and is for information exchange between the apparatuses, the units, or the modules. The processor 920 may operate in collaboration with the memory 930. The processor 920 may execute the program instructions and/or the data stored in the memory 930, so that the communication apparatus 900 implements the corresponding methods. At least one of the at least one memory may be included in the processor 920.

The communication apparatus 900 may further include the communication interface 910, is any transceiver-type apparatus, and is configured to communicate with another device or a communication network, for example, a RAN, a wireless local area network (wireless local area network, WLAN), or a wired access network. The communication interface 910 is configured to communicate with another device by using a transmission medium, so that an apparatus in the communication apparatus 900 can communicate with the another device. For example, when the communication apparatus 900 is an access network device, the another device is a terminal device or a location management function. Alternatively, when the communication apparatus is a terminal device, the another device is an access network device or a location management function. The processor 920 may receive and send data through the communication interface 910. The communication interface 910 may be specifically a transceiver.

A specific connection medium between the communication interface 910, the processor 920, and the memory 930 is not limited in this embodiment of this application. In this embodiment of this application, in FIG. 9, the memory 930, the processor 920, and the communication interface 910 are connected through a bus 940, and the bus is represented by using a thick line in FIG. 9. A manner of connection between other components is only schematically described, and imposes no limitation. Buses may be classified into an address bus, a data bus, a control bus, and the like. For ease of representation, only one thick line is used for representing the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

The memory 930 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another storage device, or any other medium that can be for carrying or storing expected program code in a form of an instruction structure or a data structure and can be accessed by a computer, but is not limited thereto. The memory may exist independently, and is connected to the processor through a communication line. The memory may alternatively be integrated with the processor.

The memory 930 is configured to store computer-executable instructions for executing the solutions in this application, and the processor 920 controls execution. The processor 920 is configured to execute the computer-executable instructions stored in the memory 930, to implement the communication methods provided in the foregoing embodiments of this application.

Optionally, the computer-executable instructions in this embodiment of this application may also be referred to as application program code. This is not specifically limited in this embodiment of this application.

It should be noted that the communication apparatus in the foregoing embodiment may be a terminal device, may be a circuit, or may be a chip used in the terminal device, or another combined device, component, or the like that has the functions of the terminal device. When the communication apparatus is the terminal device, the transceiver module may be a transceiver and may include an antenna, a radio frequency circuit, and the like, and the processing module may be a processor, for example, a central processing unit (central processing unit, CPU). When the communication apparatus is the component that has the functions of the terminal device, the transceiver module may be a radio frequency unit, and the processing module may be a processor. When the communication apparatus is the chip system, the communication apparatus may be a field programmable gate array (field programmable gate array, FPGA), an ASIC, a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module 802 may be a processor of the chip system. The transceiver module 801 or the communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory through another component), and transmit the code instructions to the processor. The processor may be configured to run the code instructions to perform the methods in the foregoing method embodiments. For another example, the interface circuit may alternatively be a signal transmission interface circuit between a communication processor and a transceiver.

For example, the communication apparatus in the foregoing embodiment may be the chip. The chip includes a logic circuit and an input/output interface, and may further include the memory. The input/output interface may be configured to receive the code instructions (the code instructions are stored in the memory, and may be directly read from the memory, or may be read from the memory through the another component), and transmit the code instructions to the logic circuit. The logic circuit may be configured to run the code instructions to perform the methods in the foregoing method embodiments. Alternatively, the input/output interface may be a signal transmission interface circuit between the logic circuit and the transceiver.

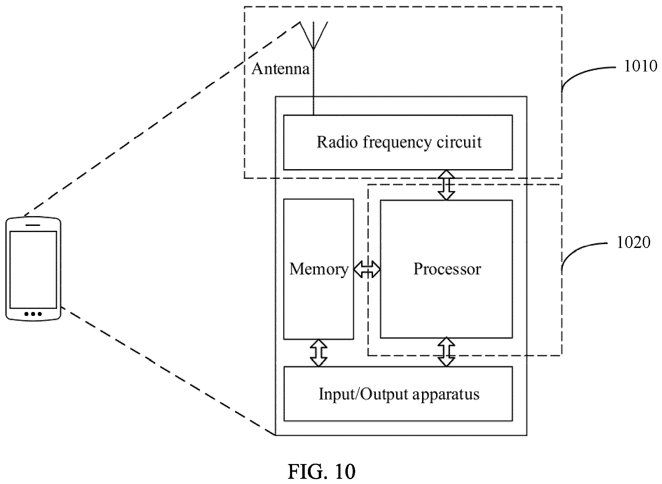

FIG. 10 is a simplified diagram of a structure of a terminal device. For ease of understanding and convenience of figure illustration, an example in which the terminal device is a mobile phone is used in FIG. 10. As shown in FIG. 10, the terminal device includes a processor, a memory, a radio frequency circuit, an antenna, and an input/output apparatus. The processor is mainly configured to: process a communication protocol and communication data, control an on-board unit, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal in a form of an electromagnetic wave through the antenna. When data is sent to the device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 10 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of an apparatus, and the processor having a processing function may be considered as a processing unit of the apparatus. As shown in FIG. 10, the apparatus includes a transceiver unit 1010 and a processing unit 1020. The transceiver unit 1010 may also be referred to as a transceiver, a transceiving apparatus, or the like. The processing unit 1020 may also be referred to as a processor, a processing board, a processing module, a processing apparatus, or the like. Optionally, a component configured to implement a receiving function in the transceiver unit 1010 may be considered as a receiving unit, and a component configured to implement a sending function in the transceiver unit 1010 may be considered as a sending unit. That is, the transceiver unit 1010 includes the receiving unit and the sending unit. The transceiver unit 1010 may also be sometimes referred to as a transceiver, a transceiver circuit, or the like. The receiving unit may also be sometimes referred to as a receiver, a receiving circuit, or the like. The sending unit may also be sometimes referred to as a transmitter, a transmitting circuit, or the like.

It should be understood that the transceiver unit 1010 is configured to perform a sending operation and a receiving operation on a terminal side in the foregoing method embodiments, and the processing unit 1020 is configured to perform an operation other than the receiving and sending operations of the terminal in the foregoing method embodiments.

When the communication apparatus is a chip-type apparatus or a circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a computer-readable storage medium, including instructions. When the instructions are run on a computer, the computer is enabled to perform the methods performed by the terminal device in the foregoing methods.

An embodiment of this application further provides a computer program product, including instructions. When the instructions are run on a computer, the computer is enabled to perform the methods performed by the terminal device in the foregoing methods.

An embodiment of this application provides a chip system. The chip system includes a processor, and may further include a memory, to implement functions of the terminal device in the foregoing methods. The chip system may consist of a chip, or may include the chip and another discrete component.

All or some of the methods provided in embodiments of this application may be implemented by using software, hardware, firmware, or any combination thereof. When software is used to implement the methods, all or some of the methods may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or other programmable apparatuses. The computer instructions may be stored in a computer-readable storage medium or may be transmitted from a computer-readable storage medium to another computer-readable storage medium. For example, the computer instructions may be transmitted from a website, computer, server, or data centre to another website, computer, server, or data centre in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer or a data storage device, for example, a server or a data centre, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, comprising:
determining that a first condition and a third condition are satisfied, wherein the first condition is that preconfigured measurement information is configured and that at least one set of measurement information in the preconfigured measurement information satisfies a measurement requirement; and the third condition is that measurement information of a positioning reference signal is not configured, or the third condition is that measurement information of a positioning reference signal does not satisfy the measurement requirement, wherein the measurement information is the measurement information of the positioning reference signal, and the measurement information comprises measurement gap MG configuration information; and
sending a first request message, wherein the first request message is for requesting to activate the at least one set of measurement information in the preconfigured measurement information.

2. The method according to claim 1, wherein positioning measurement is performed based on the MG configuration information, and positioning measurement is not performed based on PPW configuration information.

3. The method according to claim 1, wherein the method further comprises:
determining that the third condition is satisfied but the first condition is not satisfied; and
sending a second request message, wherein the second request message is for requesting the measurement information of the positioning reference signal.

4. The method according to claim 1, wherein
it is determined that a fourth condition is satisfied, wherein the fourth condition is that positioning measurement ends; and
a third request message is sent, wherein the third request message is for requesting to activate at least one set of measurement information in activated measurement information.

5. A communication method, comprising:
receiving a first request message, wherein the first request message is used by a terminal device to request, when a first condition and a third condition are satisfied, to activate at least one set of measurement information in preconfigured measurement information, the measurement information is measurement information of a positioning reference signal, and the measurement information comprises measurement gap MG configuration information, wherein the first condition is that the preconfigured measurement information is configured for the terminal device and that the at least one set of measurement information in the preconfigured measurement information satisfies a measurement requirement of the terminal device; and the third condition is that the measurement information of the positioning reference signal is not configured for the terminal device, or the third condition is that the measurement information of the positioning reference signal does not satisfy the measurement requirement of the terminal device; and
sending a response message for the first request message.

6. The method according to claim 5, wherein the method further comprises:
receiving a second request message, wherein the second request message is used by the terminal device to request the measurement information of the positioning reference signal when the third condition is satisfied but the first condition is not satisfied.

7. The method according to claim 5, wherein the method further comprises:
receiving a third request message, wherein the third request message is used by the terminal device to request, when a fourth condition is satisfied, to activate at least one set of measurement information in activated measurement information, and the fourth condition is that positioning measurement ends.

8. A communication apparatus, comprising a processing module and a transceiver module, wherein
the processing module is configured to determine that a first condition and a third condition are satisfied, wherein the first condition is that preconfigured measurement information is configured and that at least one set of measurement information in the preconfigured measurement information satisfies a measurement requirement; and the third condition is that measurement information of a positioning reference signal is not configured, or the third condition is that measurement information of a positioning reference signal does not satisfy the measurement requirement, wherein the measurement information is the measurement information of the positioning reference signal, and the measurement information comprises measurement gap MG configuration information; and
the transceiver module is configured to send a first request message, wherein the first request message is for requesting to activate the at least one set of measurement information in the preconfigured measurement information.

9. The apparatus according to claim 8, wherein the processing module is further configured to perform positioning measurement based on the MG configuration information, and not perform positioning measurement based on PPW configuration information.

10. The apparatus according to claim 8, wherein
the processing module is further configured to determine that the third condition is satisfied but the first condition is not satisfied; and
the transceiver module is further configured to send a second request message, wherein the second request message is for requesting the measurement information of the positioning reference signal.

11. The apparatus according to claim 8, wherein
the processing module is further configured to determine that a fourth condition is satisfied, wherein the fourth condition is that positioning measurement ends; and
the transceiver module is further configured to send a third request message, wherein the third request message is for requesting to activate at least one set of measurement information in activated measurement information.

12. A communication apparatus, comprising a processing module and a transceiver module, wherein
the transceiver module is configured to receive a first request message, wherein the first request message is used by a terminal device to request, when a first condition and a third condition are satisfied, to activate at least one set of measurement information in preconfigured measurement information, the measurement information is measurement information of a positioning reference signal, and the measurement information comprises measurement gap MG configuration information, wherein the first condition is that the preconfigured measurement information is configured for the terminal device and that the at least one set of measurement information in the preconfigured measurement information satisfies a measurement requirement of the terminal device; and the third condition is that the measurement information of the positioning reference signal is not configured for the terminal device, or the third condition is that the measurement information of the positioning reference signal does not satisfy the measurement requirement of the terminal device; and
the transceiver module is further configured to send a response message for the first request message.

13. The communication apparatus according to claim 12, wherein
the transceiver module is further configured to receive a second request message, wherein the second request message is used by the terminal device to request the measurement information of the positioning reference signal when the third condition is satisfied but the first condition is not satisfied.

14. The communication apparatus according to claim 12, wherein
the transceiver module is further configured to receive a third request message, wherein the third request message is used by the terminal device to request, when a fourth condition is satisfied, to activate at least one set of measurement information in activated measurement information, and the fourth condition is that positioning measurement ends.

15. A communication apparatus, wherein the communication apparatus comprises a processor and a memory, the memory is configured to store a computer program or instructions, and the processor is configured to execute the computer program or the instructions in the memory, to enable the method according to any one of claims 1 to 4 or the method according to any one of claims 5 to 7 to be performed.

16. A computer-readable storage medium, wherein the computer-readable storage medium stores computer instructions; and when the computer instructions are executed, a computer is enabled to perform the method according to any one of claims 1 to 4 or the method according to any one of claims 5 to 7.

17. A computer program product, wherein the computer program product comprises computer program code; and when the computer program code is run by a computer, the computer is enabled to perform the method according to any one of claims 1 to 4 or the method according to any one of claims 5 to 7.
